(19) Europäisches Patentamt
European Patent Office
Office européen des brevets

(11) **EP 1 979 738 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **07703087.2**

(22) Anmeldetag: **27.01.2007**

(51) Int Cl.:
*G01N 27/447* (2006.01)   *F04B 19/00* (2006.01)
*B01L 3/00* (2006.01)

(86) Internationale Anmeldenummer:
**PCT/EP2007/000715**

(87) Internationale Veröffentlichungsnummer:
**WO 2007/090531 (16.08.2007 Gazette 2007/33)**

(54) **ANORDNUNG ZUR ERZEUGUNG VON FLÜSSIGKEITSSTRÖMUNGEN UND/ODER TEILCHENSTRÖMEN, VERFAHREN ZU IHRER HERSTELLUNG UND ZU IHREM BETRIEB SOWIE IHRE VERWENDUNG**

ARRANGEMENT FOR GENERATING LIQUID FLOWS AND/OR PARTICLE FLOWS, METHOD FOR PRODUCING AND OPERATING SAID ARRANGEMENT AND USE OF THE LATTER

DISPOSITIF DE RÉALISATION DE FLUX DE LIQUIDES ET/OU DE COURANTS DE PARTICULES, SON PROCÉDÉ DE FABRICATION ET DE FONCTIONNEMENT ET SON UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2006 DE 102006004887**

(43) Veröffentlichungstag der Anmeldung:
**15.10.2008 Patentblatt 2008/42**

(73) Patentinhaber: **Karlsruher Institut für Technologie**
**76131 Karlsruhe (DE)**

(72) Erfinder:
• **CLASS, Andreas**
**76351 Linkenheim-Hochstetten (DE)**
• **BARZ, Dominik**
**68199 Mannheim (DE)**

(74) Vertreter: **Gärtner, Stephan et al**
**Karlsruher Institut für Technologie**
**Stabsabteilung Innovation**
**Postfach 36 40**
**76021 Karlsruhe (DE)**

(56) Entgegenhaltungen:
**EP-A- 1 362 827**       **WO-A-99/17883**
**US-A1- 2003 143 081**   **US-A1- 2005 230 080**

• **AJDARI A: "Electro-osmosis on inhomogeneously charged surfaces" PHYSICAL REVIEW LETTERS USA, Bd. 75, Nr. 4, 24. Juli 1995 (1995-07-24), Seiten 755-758, XP002429618 ISSN: 0031-9007**
• **STROOCK A D ET AL: "Patterning electro-osmotic flow with patterned surface charge" PHYSICAL REVIEW LETTERS APS USA, Bd. 84, Nr. 15, 10. April 2000 (2000-04-10), Seiten 3314-3317, XP002429619 ISSN: 0031-9007 in der Anmeldung erwähnt**

**Beschreibung**

Die Erfindung betrifft eine Anordnung zur Erzeugung von Flüssigkeitsströmungen und/oder Teilchenströmen aus zumindest teilweise elektrisch geladenen Teilchen, die sich in einer Flüssigkeit befinden, jeweils ein Verfahren zur Herstellung und zum Betrieb von erfindungsgemäßen Anordnungen und ihre Verwendung als frei programmierbare mikrofluidische Analyse- und/oder Syntheseeinheit oder zur lokalen Kühlung eines angrenzenden mikroelektronischen Bauteils oder Prozessors.

Flüssigkeitsströmungen und Teilchenströme von zumindest teilweise (partiell) elektrisch geladenen Teilchen lassen sich mittels elektrischer Felder realisieren. Als wesentliche physikalische Phänomene treten hierbei die *Elektroosmose* und die *Elektrophorese* auf, die zu der Klasse der *elektrokinetischen* Effekte gehören.

Als *Elektroosmose* wird die Bewegung einer Flüssigkeit unter dem Einfluss eines extern induzierten elektrischen Feldes bezeichnet. An der Oberfläche (Wand) eines Substrats sind in der Regel elektrische Ladungen vorhanden. Kommt die Oberfläche in Kontakt mit einer Flüssigkeit, die frei bewegliche elektrische Ladungen beinhaltet, bildet sich eine so genannte *elektrische Doppelschicht* aus. Die Ladung an der Oberfläche des Substrats zieht Ladungsträger der Flüssigkeit, die entgegengesetzt zur Ladung der Oberfläche geladen sind, an. Die Elektroneutralität der Flüssigkeit ist in der elektrischen Doppelschicht durch den Ladungsüberschuss dann nicht mehr gegeben. Durch das extern induzierte elektrische Feld wandern die überschüssigen Ladungsträger in der elektrischen Doppelschicht in eine Vorzugsrichtung. Aufgrund von viskosen Wechselwirkungen wird dadurch eine Bewegung der umgebenden Flüssigkeit verursacht. Die Geschwindigkeit der Bewegung ist proportional zum Betrag des elektrischen Felds. Der Proportionalitätsfaktor wird elektroosmotische Mobilität genannt.

Unter *Elektrophorese* wird die gerichtete Bewegung von zumindest teilweise elektrisch geladenen Teilchen in einer Flüssigkeit oder eines Gels unter Einwirkung eines äußeren elektrischen Feldes verstanden. Die Geschwindigkeit der Teilchen ist proportional zum Betrag des elektrischen Felds. Der Proportionalitätsfaktor wird elektrophoretische Mobilität genannt. Die Mobilitäten sind in der Regel spezifisch und von der umgebenden Flüssigkeit abhängig.

Zum Antrieb einer Flüssigkeit mittels *Elektroosmose* wird ein elektrisches Gleichspannungsfeld eingesetzt, das durch das Einbringen eines Elektrodenpaars in die Flüssigkeit erzeugt wird. Der Anteil des elektrischen Felds, der tangential zur Wand eines Substrats steht, induziert die Strömung im Bereich der elektrischen Doppelschicht. Typische erzielbare Strömungsgeschwindigkeiten liegen im Bereich von mm/s, wenn elektrische Felder der Größenordung kV/cm eingesetzt werden. Die elektroosmotische Mobilität hängt insbesondere von der Wandladung und der Konzentration der frei beweglichen Ladungsträger in der Flüssigkeit ab.

Mit zunehmender Konzentration der frei beweglichen Ladungsträger nimmt die Anzahl der Teilchen, auf die die Kräfte des elektrischen Felds wirken und damit die Strömung verursachen, zu. Gleichzeitig sinkt jedoch die Dicke der elektrischen Doppelschicht und damit verkleinert sich das Volumen, in dem Kräfte wirken. Aufgrund dieser gegenläufigen Effekte ergibt sich ein Optimum der Ladungskonzentration.

Durch die Elektroosmose kann eine Strömung ohne die Verwendung mechanischer Komponenten erzeugt werden. Daher eignet sich das Prinzip besonders zum Einsatz in Geometrien, die Abmessungen im Mikromaßstab aufweisen. In einem geraden Mikrokanal stellt sich ein annähernd gleichmäßiges (pfropfenförmiges) Geschwindigkeitsprofil über die Kanalweite ein. Dies ist besonders vorteilhaft beim Transport von biologischen Zellen und anderen Teilchen, an denen keine großen Scherkräfte wirken dürfen.

Die Elektrophorese wird als Trennprozess für Mischungen von elektrisch zumindest teilweise geladenen Teilchen eingesetzt. Dazu werden die Teilchen in der Regel in eine Geometrie mit kleinen Abmessungen wie z.B. eine Kapillare injiziert. Die Geometrie ist mit einer Flüssigkeit befüllt, die als Probenträger dient. In gleicher Weise wie im Falle der Elektroosmose wird ein Elektrodenpaar in die Geometrie eingebracht und ein Gleichspannungsfeld erzeugt. Die Teilchen bewegen sich im elektrischen Feld mit ihrer spezifischen Richtung und Geschwindigkeit. Unterscheidet sich die elektrophoretische Mobilität der Teilchenarten merklich, so wird eine Auftrennung der Teilchen nach ihrer Art erzielt. Typische erzielbare Wanderungsgeschwindigkeiten liegen im Bereich von mm/s, wenn elektrische Felder der Größenordung kV/cm eingesetzt werden.

Bei beiden elektrokinetischen Effekten wird ein Elektrodenpaar in eine Flüssigkeit eingebracht. Für technische Anwendungen liegen die elektrischen Spannungen im Bereich von kV. Da die eingesetzten Flüssigkeiten in der Regel überwiegend aus Wasser bestehen, laufen bedingt durch die hohen Spannungen Elektrolysereaktionen ab, wodurch sich das Wasser in Wasserstoff und Sauerstoff zersetzt. Diese gasen aus und induzieren unerwünschte Sekundärströmungen und stören die lokale Leitfähigkeit. Typische Beträge der Gleichgewichtspotentiale der Zersetzungsreaktionen liegen im Standardzustand (Aktivität 1 mol/ dm$^3$, T = 298 K) in einer Größenordnung von 1 V. Das Gleichgewichtspotential stellt jedoch nur den Betrag dar, der zum thermodynamischen Ablauf der Reaktion benötigt wird. Aufgrund von Reaktionshemmungen ist in der Praxis der Betrag des Potentials merklich höher als das Gleichgewichtspotential.

Die eingesetzten hohen Spannungen bewirken einen relativ hohen elektrischen Strom in der Flüssigkeit, wodurch es aufgrund der *Jouleschen* Wärme zu einer Erwärmung der Flüssigkeit kommt. Der Temperaturanstieg wirkt sich besonders bei Analyseverfahren negativ aus. Freie Konvektion und ein inhomogenes Temperaturprofil verschlechtern deren Trennschärfe und Auflösung. Daher verbietet sich oft der Einsatz hoher Spannungen und die technische Nutzung von Elektroosmose und Elektrophorese sind eingeschränkt.

D.P.J. Barz und P. Ehrhard beschreiben in Model and verification of electrokinetic flow and transport in a micro electrophoresis device, Lab on a chip 2005, Band 5, S. 949-958, die Theorie der Elektroosmose und der Elektrophorese. Für gerade und wenig gekrümmte Geometrien ergibt sich die elektroosmotische Geschwindigkeit $u_{EO}$ am Übergang der elektrischen Doppelschicht zur elektrisch neutralen Kernströmung, also im geringen Abstand zur Wand, zu

$$u_{EO} = (q_{zeta} \cdot l_D / \eta) E_t,$$

wobei $E_t$ der zur Wand tangentiale Anteil des externen elektrischen Felds ist. Der Vorfaktor $q_{zeta} \cdot l_D / \eta$ stellt eine Formulierung der elektroosmotischen Mobilität, die sich aus der elektrischen Ladungsdichte $q_{zeta}$ an der Scherfläche zwischen adsorbierter und diffuser Ladungsschicht, der Dicke $l_D$ der elektrischen Doppelschicht und der dynamischen Viskosität $\eta$ der Flüssigkeit zusammensetzt. Die Ladungsdichte an der Scherschicht kann bei Kenntnis des Zeta-Potentials $\zeta$ aus

$$q_{zeta} = -\varepsilon \zeta / l_D$$

bestimmt werden, wobei $\varepsilon$ die Permittivität der Flüssigkeit ist. Die elektrophoretische Geschwindigkeit $u_{EP}$ eines elektrisch geladenen Teilchens unter Einfluss eines elektrischen Felds $E$ ergibt sich zu

$$u_{EP} = \lambda_{EP} E.$$

Die elektrophoretische Mobilität $\lambda_{EP}$ des Teilchens kann bei einfachen Ionen in unendlicher Verdünnung berechnet, sonst durch Messung bestimmt werden.

N.J. Petersen, R.P.H. Nikolajsen, K.B. Mogensen und J.P. Kutter erläutern in Effect of Joule heating on efficiency and performance for microchip-based and capillary-based electrophoretic separations: A closer look, Electrophoresis 2004, Band 25, S. 253-269, den Einfluss der Temperaturerhöhung verursacht durch die *Joulesche* Wärme auf elektrophoretische Trennsysteme. Es wird festgestellt, dass die Temperatur der Flüssigkeit proportional zum Quadrat der elektrischen Feldstärke ansteigt. In konventionellen Kapillaren kann schon bei relativ kleinen elektrischen Feldstärken ein Sieden der Flüssigkeit beobachtet werden. Solche Effekte werden in ebenen mikrofluidischen Einheiten bei vergleichbaren Bedingungen nicht beobachtet. Theoretische Berechnungen zeigen jedoch, dass es bei Kapillaren und ebenen Einheiten ab einer spezifischen elektrischen Feldstärke zur Ausbildung eines radialen Temperaturprofils kommt und sich die Trennleistung dadurch verschlechtert.

B.J. Kirby und E.F. Hasselbrink Jr. beschreiben in Zeta Potential of microfluidic substrates: 2. Data for polymers, Electrophoresis 2004, Band 25, S. 203-213, und in Zeta Potential of microfluidic substrates: 2. Data for Polymers, Electrophoresis 2004, Band 25, S. 203-213, den Zusammenhang des Zeta-Potentials und häufig in der Mikrofluidik verwendeten Systemen, also der Paarung Flüssigkeit und Substrat der mikrofluidischen Einheit. Das Zeta-Potential für Glas, Silikate und viele Kunststoffe ist über eine weite Variation des pH-Werts und der Flüssigkeit überwiegend negativ. Jedoch existieren auch Kunststoffe, z.B. Polyamide bei pH ≤ 6, die ein positives Zeta-Potential aufweisen.

R.B.M. Schasfort, S. Schlautmanm, J. Hendrickse und A. van den Berg beschreiben in Field-Effect Flow Control for Microfabricated Fluidic Networks, Science 1999, Band 286, S. 942-945 ein Verfahren zur Manipulation des Zeta-Potentials an den Wänden von Mikrokanälen, die aus einem Halbleitermaterial gefertigt sind, und zeigen Ergebnisse derartiger Experimente. Hierzu bringen sie zwei Elektroden in einen Mikrokanal ein, der mit einer Flüssigkeit gefüllt ist. Aufgrund der Spannung zwischen den Elektroden wird eine elektroosmotische Strömung erzeugt. Dann wird zwischen einer dritten Elektrode außerhalb der Kanalwand und dem Fluid ein zusätzliches elektrisches Feld, senkrecht zur Kanalwand induziert. Durch das Potential an der dritten Elektrode wird das Zeta-Potential und somit die elektroosmotische Strömung beeinflusst. Es wird gezeigt, dass bei einem Wechsel der dritten Elektrode von einem positiven Potential zu einem negativen Wert auch die Strömungsrichtung und daher das Vorzeichen des Zeta-Potentials wechseln.

A.D. Stroock, M. Weck, D.T. Chiu, W.T.S. Huck, P.J.A. Kenis, R.F. Ismagilov und G.M. Whitesides beschreiben in Patterning Electro-osmotic Flow with Patterned Surface Charge, Physical Review Letters 2000, Band 84, S. 3314-3317, das Verhalten der elektroosmotischen Strömung in einem Kanal mit unterschiedlichen Oberflächenladungen. Dazu werden zwei gegenüberliegende Wände eines rechteckigen Kanals mit zwei verschiedenen Beschichtungen versehen. Beide Wände weisen nach der Beschichtung einen ähnlichen Betrag der Ladungsdichte auf, unterscheiden sich jedoch in ihrem Vorzeichen. Wird nun ein elektrisches Feld längs der Kanalwand angelegt, ergibt sich ein lineares Strömungsprofil. Ausgehend von einer positiven Geschwindigkeit u an der negativ geladenen Wand fällt die Geschwindigkeit bis in die Kanalmitte auf null ab, um schließlich an der positiven Wand den Wert -u zu erreichen. In einer weiteren Anordnung wird eine Kanalwand in einer Art und Weise beschichtet, dass sich eine regelmäßige abwechselnde Struktur von positiven und negativen Oberflächenladungen ergibt. Bei Anlegen eines elektrischen Feldes in Richtung des Kanals bilden sich über den behandelten Abschnitten Wirbel aus. Der Drehsinn der Wirbel ist abhängig vom Vorzeichen der Oberflächenladung. Ein nennenswerter Flüssigkeitstransport ist durch eine solche Anordnung nicht zu erzielen. Weiterhin kann eine solche Anordnung für analytische Verfahren nicht genutzt werden.

R.-L. Chien und L. Bousse beschreiben in Electroosmotic pumping in microchips with nonhomogeneous distribution of electrolytes, Electrophoresis 2002, Band 23, S. 1862-1869, die Beschichtung des Inneren einer Kapillare mit einem Polymer, um so den Wert des Zeta-Potentials und damit der elektroosmotischen Strömungsgeschwindigkeit zu verringern.

Y. Takamura, H. Onoda, H. Inokuchi, S. Adachi, A. Oki und Y. Horiike beschreiben in Low-voltage electroosmosis pump for stand-alone microfluidics devices, Electrophoresis 2003, Band 24, S. 185-192, eine Pumpe auf der Basis von Flüssigkeitsströmungen, die mittels Elektroosmose erzeugt werden. Um deren Leistung zu erhöhen, wird theoretisch vorgeschlagen, zwei einzelne Pumpen mit entgegengesetztem Zeta-Potential, die aus entgegengesetzten elektrischen Feldern dieselbe Strömungsrichtung erzeugen, in Reihe zu schalten. Dieser Ansatz wird jedoch von den Autoren als kaum realisierbar verworfen. Diese bauen vielmehr eine Pumpe mit hoher Leistung auf, indem sie Bereiche mit geringem und großem Querschnitt, die mäanderförmig zwischen einer positiven und einer negativen Elektrode eingefügt sind, in Reihe schalten. Als nachteilig an dieser Anordnung erweist sich der hohe Flächenbedarf und die geringe Flexibilität der Anordnung.

Die EP 0727 661 B1 offenbart ein Verfahren und eine Vorrichtung zum Mischen von Flüssigkeiten, bei denen die beiden zu mischenden Flüssigkeiten jeweils mittels einer elektroosmotischen Pumpe zu einer Verbindungsstelle gebracht und dort gemischt werden. Nachteilig hieran sind die Verwendung von Kapillaren, eine hohe erforderliche Spannung sowie fehlende Flexibilität.

I. Gitlin, A.D. Stroock, G.M. Whitesides und A. Ajdari beschreiben in Pumping based on Transverse Electrokinetic Effects, Applied Physics Letters 2003, Band 83, S. 1486-1488, eine mikrofluidische Pumpe, bei der ein transversales elektrisches Feld in einem Kanal, in den in einer Wand schräge Vertiefungen eingearbeitet sind, eine longitudinale Strömung entlang der Kanalrichtung hervorruft. Weiterhin wird in diesem Artikel die Steuerung derartiger Strömungen mittels Spannungen zwischen Kreuzungen von Kanälen vorgestellt. In dieser Anordnung ist die Strömung an Kanäle gebunden, der Betrag des Nettotransports ist gering und an den Kreuzungen tritt aufgrund der in Wirklichkeit helischen Trajektoren zwangsläufig eine nicht unbedingt erwünschte Vermischung der Flüssigkeitsströme auf.

Aus V. Studer, A. Pepin, Y. Chen und A. Ajdari, An integrate AC electrokinetic pump in a microfluidic loop for fast and tunable flow control, Analyst 2004, Band 129, S. 944-949 ist eine asymmetrische Elektrodenanordnung auf einem homogenen Substrat bekannt, die mittels einer Wechselspannung im Bereich von 1-10 kHz als mikrofluidische Pumpe arbeitet. Weitere derartige Anordnungen, die mit Wechselspannung betrieben werden, sind in der EP 0 595 290 B1 und der DE 101 03 399 A1 offenbart. Ein möglicher Mechanismus der Wechselfeld-Elektroosmose liegt in der Aufheizung der Flüssigkeit durch das induzierte elektrische Feld. Durch die Aufheizung ändert sich lokal die Permittivität der Flüssigkeit. Dadurch können bei Vorhandensein eines inhomogenen elektrischen Felds elektrische Volumenkräfte induziert werden. Jedoch ist dieses Phänomen in der Regel schwach ausgeprägt.

A. Ramos, H. Morgan, N.G. Green und A. Castellanos stellen in AC Electric-Field-Induced Fluid Flow in Microelectrodes, J. Colloid and Surface Sciences 1999, Band 217, S. 420-422, eine andere These auf. Bei der Wechselfeld-Elektroosmose ist nicht nur das elektrische Feld inhomogen und von der Frequenz abhängig, sondern auch ein Teil der elektrischen Ladungsdichte der Elektrodenoberfläche ist gekoppelt mit der Frequenz. Bei hohen Frequenzen fällt das Potential überwiegend im Elektrolyt ab, die induzierte Ladung in der elektrischen Doppelschicht ist klein und die resultierende Strömung daher auch. Bei niedrigen Frequenzen fällt das Potential überwiegend über die elektrische Doppelschicht ab, der tangentiale Anteil des elektrischen Felds ist klein und es entsteht wieder keine nennenswerte Strömung. Jedoch bildet sich eine nennenswerte stationäre Strömung bei mittleren Frequenzen aus.

A. Ramos, H. Morgan, N.G. Green, A. Gonzales und A. Castellanos beschreiben in Pumping of liquids with travelling-wave electroosmosis, Journal of Applied Physics 2005, Band 97, S. 084906-1 bis 084906-8, eine weitere Anordnung zur Erzeugung einer elektroosmotischen Strömung. In einem Mikrokanal wird hierzu eine Anordnung von vielen kleinen symmetrischen Elektroden mit einem regelmäßigen Abstand zueinander, an der Kanalwand angebracht. Dann wird ein Spannungssignal in Form eines Sinus-Signals an der Elektrodenanordnung induziert. Die Spannung an zwei aufeinander folgenden Elektroden weist eine Phasenverschiebung von 90° auf. Durch diese Anordnung können nennenswerte Flüssigkeitsströmungen bei Amplituden von 1 Volt erzeugt werden. Jedoch sind die vorherrschenden Mechanismen nicht vollständig geklärt. So wechselt z. B. ab einem gewissen Schwellenwert der Spannungsamplitude die Richtung der Strömung. Außerdem scheint der Schwellenwert abhängig vom Elektrodenmaterial zu sein. Weiterhin ergibt sich bei diesem Verfahren eine relativ hohe Geschwindigkeit der Flüssigkeit tangential zur Hauptströmungsrichtung, was hinsichtlich einer Anwendung in der Analytik problematisch sein kann.

Die EP 1 362 827 A1 offenbart das Prinzip zur Erzeugung von Flüssigkeitsströmungen und/oder Teilchenströmen aus zumindest teilweise elektrisch geladenen Teilchen, die sich in einer Flüssigkeit befinden, bei dem die Kraft aus entgegengesetzt gerichteten elektrischen Feldern eine gleichgerichtete Strömung der Flüssigkeit tangential zur der Oberfläche des Substrats hervorruft.

Ausgehend hiervon ist es Aufgabe der vorliegenden Erfindung, eine Anordnung zur Erzeugung von Flüssigkeitsströmungen und/oder Teilchenströmen aus zumindest teilweise elektrisch geladenen Teilchen, die sich in einer Flüssigkeit befinden, vorzuschlagen, die die genannten Einschränkungen nicht aufweisen. Insbesondere soll eine derartige Anordnung einen über äußere Mittel weitgehend frei steuerbaren nennenswerten großräumigen Nettotransport der Flüssigkeit und/oder von in der Flüssigkeit enthaltenen Teichen bewirken. Weiterhin soll eine derartige Anordnung neben dem Flüssigkeits- und/oder Teilchentransport wenigstens zwei weitere Grundfunktionen eines *Lab on a Chip* wie Fokussierung und Aufkonzentrierung, Strömungsmischung, Strömungsaufteilung, -abzweigung und -kreuzung, Dosierung, Markierung, Reaktion und Analyse oder Detektion bereitstellen.

Weiterhin besteht die Aufgabe der Erfindung darin, jeweils ein Verfahren zur Herstellung einer derartigen Anordnung und zu ihrem Betrieb sowie ihre Verwendung vorzuschlagen.

Diese Aufgabe wird im Hinblick auf die Anordnung durch die Merkmale des Patentanspruchs 1, im Hinblick auf eine Vorrichtung, im Hinblick auf das Verfahren zu ihrer Herstellung durch die Schritte des Patentanspruchs 8, im Hinblick auf das Verfahren zu ihrem Betrieb durch die Merkmale des Patentanspruchs 13 und im Hinblick auf ihre Verwendung durch die Ansprüche 15 und 16 gelöst. Die abhängigen Ansprüche beschreiben jeweils vorteilhafte Ausgestaltungen der Erfindung.

Eine erfindungsgemäße Anordnung enthält ein Substrat aus einem Nichtleiter oder aus einem Halbleiter wie z.B. Glas, Kunststoff oder Silizium sowie steuerbare Mittel zur Bereitstellung von elektrischen Spannungen für eine Vielzahl von Elektrodenpaaren, die in Form einer Matrix, d.h. einem zweidimensionalen Array, vorzugsweise schachbrettartig, auf dem Substrat aufgebracht sind. Bei Anlegen einer Spannung wird hierdurch zwischen den betreffenden Elektrodenpaaren ein elektrisches Feld erzeugt, das innerhalb einer elektrischen Doppelschicht eine Kraft auf eine Flüssigkeit ausübt, die an das Substrat angrenzt, und ggf. zusätzlich oder ausschließlich sowohl innerhalb als auch außerhalb der elektrischen Doppelschicht eine Kraft auf die Teilchen ausübt.

Entscheidend ist, dass die Oberfläche des Substrats derart gestaltet ist, dass die Kraft aus entgegengesetzt gerichteten elektrischen Feldern eine gleichgerichtete Strömung der Flüssigkeit tangential zur der Oberfläche des Substrats hervorruft und ggf. zusätzlich oder ausschließlich den elektrophoretischen Stofftransport innerhalb und außerhalb der elektrischen Doppelschicht ebenfalls normal zur der Oberfläche des Substrats ermöglicht.

Die Elektrodenabstände sind vorzugsweise wenigstens so groß wie die Dicke der elektrischen Doppelschicht. Durch die Wahl kleiner Elektrodenabstände von 10 nm bis 1 mm, bevorzugt von 100 nm bis 100 $\mu$m lassen sich, wie gewünscht, hohe elektrische Feldstärken beim Anlegen von Potentialen mit geringen Absolutwerten erzielen.

Jede Elektrode ist vorzugsweise zwischen zwei Bereichen auf der Oberfläche des Substrats angeordnet, die jeweils unterschiedliche Oberflächeneigenschaften aufweisen. In einer besonders bevorzugten Ausgestaltung weisen zwei benachbarte Bereiche auf der Oberfläche des Substrats gleiche Abmaße und dadurch gleiche Elektrodenabstände auf und besitzen jeweils eine positive und eine negative Wandladung. Diese Aussage ist gleichbedeutend mit der Feststellung, dass sich das Zeta-Potential in jeweils zwei benachbarten Substratfeldern in seinem Vorzeichen unterscheidet.

In einer alternativen Ausgestaltung weisen zwei benachbarte Bereiche auf der Oberfläche des Substrats bei gleichem Vorzeichen jeweils einen unterschiedlichen Betrag der Oberflächenladungsdichte auf. Diese Aussage ist gleichbedeutend mit der Feststellung, dass sich das Zeta-Potential in jeweils zwei benachbarten Substratfeldern in seinem Betrag unterscheidet, nicht aber in seinem Vorzeichen. Die Strömungsgeschwindigkeit nimmt mit zunehmender Differenz im Betrag der Oberflächenladungsdichte bzw. dem Betrag des Zeta-Potentials zwischen zwei benachbarten Bereichen zu.

In einer besonders bevorzugten Ausgestaltung besteht zumindest die Oberfläche des Substrats aus einem Halbleitermaterial wie z.B. einem dotierten oder undotierten Silizium-Wafer. In dieser Ausgestaltung ist es vorteilhaft, die steuerbaren Mittel zur Bereitstellung von elektrischen Spannungen für die Vielzahl von Elektrodenpaaren, die bereits in Form einer Matrix auf dem Substrat angebracht ist, auch zur Beeinflussung der Oberflächenladung, d.h. des Zeta-Potentials, in Bereichen auf der Oberfläche des Substrats einzusetzen. Alternativ kann auch eine Beeinflussung der Oberflächenladung über eine für diesen Zweck separat angebrachte zweite steuerbare Mittel vorgesehen werden. Vorteilhaft ist es, die Elektroden schachbrettartig zu gruppieren und gemeinsam zu schalten.

In einer alternativen Ausgestaltung sind von zwei benachbarten Bereichen auf der Oberfläche des Substrats jeweils einer mit einer Beschichtung aus zwei Polymeren mit unterschiedlicher Oberflächenladung versehen. Hierdurch wird erreicht, dass sich das Zeta-Potential in jeweils zwei benachbarten Substratfeldern in seinem Vorzeichen unterscheidet.

In einer weiteren Ausgestaltung ist jede Elektrode jeweils zwischen zwei Bereichen auf der Oberfläche des Substrats angeordnet, deren Höhe über dem Substrat sich unterscheidet. Dies kann dadurch erreicht werden, dass jeweils eines der Felder eine Vertiefung aufweist, deren Tiefe vorzugsweise höchstens dem Abstand der Elektroden in einem Elektrodenpaar entspricht.

Die Erfindung betrifft weiterhin eine Vorrichtung, die durch mindestens zwei erfindungsgemäße Anordnungen begrenzt wird, zwischen denen sich die Flüssigkeit befindet. Vorzugsweise sind die mindestens zwei erfindungsgemäßen Anordnungen einander gegenüberliegend angeordnet.

Die Erfindung betrifft weiterhin ein Verfahren zur Herstellung einer Anordnung zur Erzeugung von Flüssigkeitsströmungen und/oder Teilchenströmen aus zumindest teilweise elektrisch geladenen Teilchen, die sich in einer Flüssigkeit befinden, das die folgenden Schritte umfasst.

Zunächst wird ein Substrat bereitgestellt, auf das steuerbare Mittel zur Beschaltung der Vielzahl von Elektroden aufgebracht werden. Hieran anschließend werden die Elektroden auf die Oberfläche des Substrats aufgebracht und die Oberfläche des Substrats wird derart behandelt, dass sich die Oberflächeneigenschaften jeweils zweier benachbarter Bereiche unterscheiden. Wird nun auf das Substrat eine Flüssigkeit aufgebracht, ist die erfindungsgemäße Anordnung einsatzbereit.

Die Oberfläche des Substrats wird so in einzelne Bereiche strukturiert, dass zwei zueinander benachbarte Bereiche vorzugsweise galvanisch voneinander getrennt sind. Anschließend wird jeder Bereich elektrisch kontaktiert. Die Kontakte werden mit der den steuerbaren Mitteln zur Bereitstellung von elektrischen Spannungen verbunden, so dass die Oberflächenladung der Bereiche individuell beeinflusst werden kann. Dann werden die Elektroden vorzugsweise an solchen Stellen auf der Oberfläche des Substrats aufgebracht, die zwischen zwei Bereichen gelegen sind. Nach dem Kontaktieren der Elektroden in Paaren und Verbinden dieser Kontakte mit den steuerbaren Mitteln zur Bereitstellung von elektrischen Spannungen wird eine Flüssigkeit auf das Substrat aufgebracht.

Eine derartige Anordnung lässt sich herstellen, in dem ein Glas- oder Kunststoffsubstrat nur in bestimmten Bereichen mit Polycycloolefin oder Polyamid, deren Zeta-Potentiale bei einem pH von höchstens 6 ein positives Vorzeichen besitzen, oder mit einem Metalloxid mit positiver Oberflächenladung, wie z.B. Aluminiumoxid, beschichtet wird. Die übrigen Bereiche auf dem Substrat bleiben frei, so dass dort das Glas oder der Kunststoff, die ein negatives Zeta-Potential und damit eine negative Wandladung besitzen, die Oberfläche des Substrats bilden. Der pH-Wert kann über einen Puffer, der der Flüssigkeit zugegeben wird, eingestellt werden.

In einer alternativen Verfahrensweise besteht die Oberfläche, aus einem Halbleiter und wird zwischen den Elektroden in galvanische getrennte Bereiche unterteilt und elektrisch kontaktiert. In jedem Bereich lässt sich so ein individuelles Potential einstellen, mit dem eine gewünschte Oberflächenladung bzw. ein gewünschtes Zeta-Potential erzeugt wird.

Auf der Oberfläche des Substrats wird eine Vielzahl von Elektroden mit geringem Abstand zueinander angebracht. Wird eine elektrische Spannung an ein Elektrodenpaar angelegt, so entsteht zwischen dem Elektrodenpaar ein elektrisches Feld, welches einen Strömungsantrieb innerhalb der elektrischen Doppelschicht der an die Oberfläche des Substrats angrenzenden Flüssigkeit bewirkt. Weiterhin ermöglicht eine solche Anordnung den elektrophoretischen Teilchentransport innerhalb und außerhalb der elektrischen Doppelschicht.

Durch das Einbringen einer Vielzahl von Elektroden in einer Matrixanordnung werden eine lokale Flüssigkeitsströmung und/oder ein lokaler Teilchenstrom erzeugt. Um eine großräumige Strömung bzw. ein großräumiger Teilchenstrom zu erzeugen, muss die Spannung von Elektrode zu Elektrode zunehmen, so dass sich insgesamt wieder hohe anzulegende Spannungen ergeben. Erfindungsgemäß wird die Oberfläche des Substrats jedoch so gestaltet, dass sich eine großräumige Strömung bzw. ein großräumiger Teilchenstrom bereits bei kleinen alternierenden Spannungen ergibt. *Großräumig* bedeutet hier, dass sich eine Strömung der Flüssigkeit bzw. ein Teilchenstrom einstellt, die bzw. der sich über Strecken, die wesentlich größer als der Abstand zwischen benachbarten Elektroden sind, erstreckt.

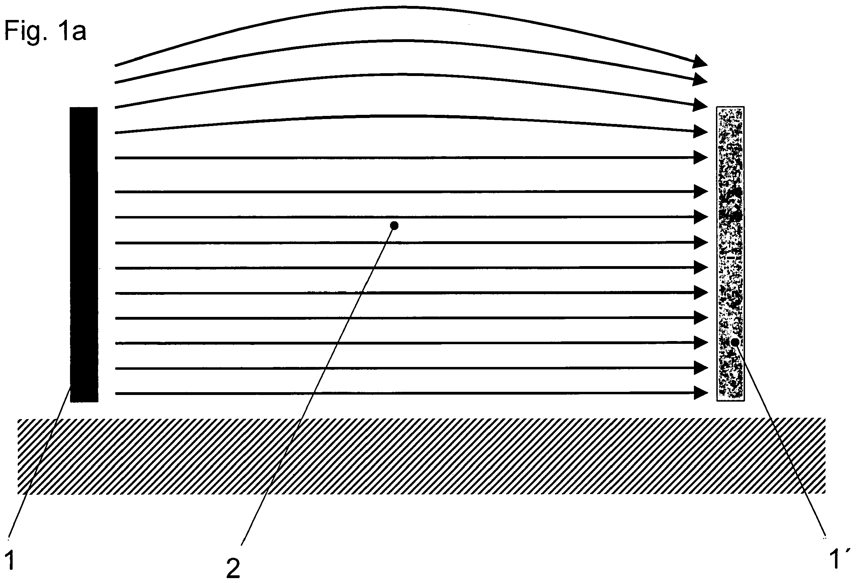

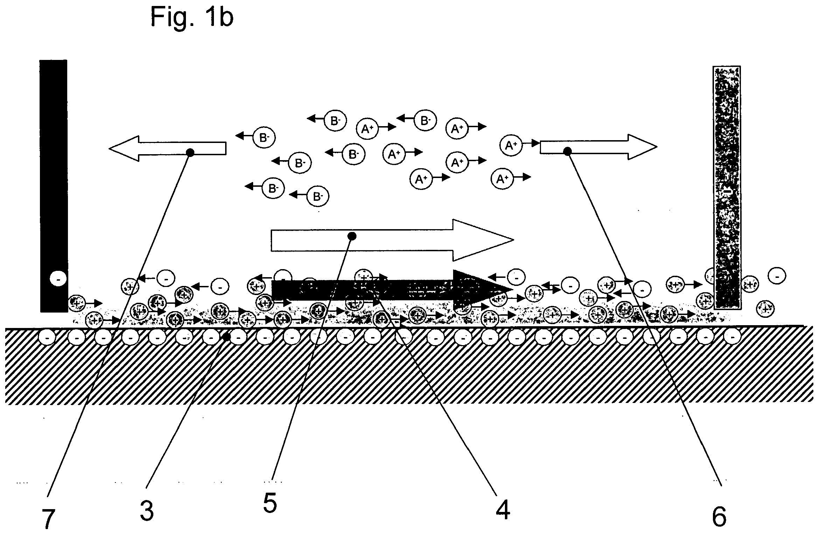

Das aus dem Stand der Technik bekannte Verfahren zur Nutzung elektrokinetischer Effekte für *Lab on a Chip*-Anwendungen ist in **Fig. 1a und Fig. 1b** abgebildet. Zwei Elektroden werden in einer Mikrostruktur in großem Abstand zueinander angeordnet. Durch Anlegen einer hohen Spannung zwischen den beiden Elektroden wird gemäß **Fig. 1a** ein elektrisches Feld erzeugt, das ein großes Volumen der Mikrostruktur so durchdringt, dass in diesem Bereich überall ein Stromfluss und damit *Joulesche* Wärme induziert wird.

Das elektrische Feld erzeugt in der elektrischen Doppelschicht aufgrund des relativ gleichmäßigen Zeta-Potentials entlang der Oberfläche des Substrats gemäß **Fig. 1b** ein gleichmäßiges Kraftfeld und daher eine elektroosmotische Strömung. Eine Mischung zumindest teilweise elektrisch geladener Teilchen innerhalb und außerhalb der elektrischen Doppelschicht trennt sich unter Einfluss des elektrischen Feldes in ihre Bestandteile auf.

Hinsichtlich der Anwendung in einer elektrophoretischen Trenneinheit ist dies ein gewünschter Effekt. Die Anordnung erlaubt aber nicht den bloßen Transport von Mischungen zumindest teilweise elektrisch geladener Teilchen, was sich in vielen Fällen als nachteilig auswirkt. Aufgrund der hohen Spannung zwischen den Elektroden besteht weiterhin die Wahrscheinlichkeit von elektrolytischen Zersetzungsreaktionen der Flüssigkeit.

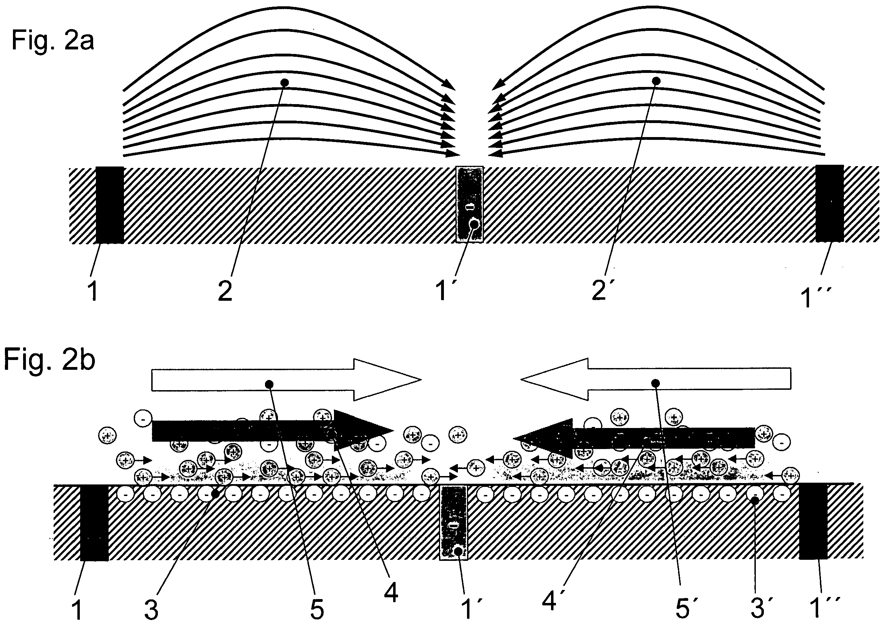

Werden jeweils zwei benachbarte Elektrodenpaare, die an der Oberfläche des Substrats angebracht sind, mit einer positiven bzw. einer negativen Gleichspannung beaufschlagt, ergeben sich elektrische Felder, die gemäß **Fig. 2a** in ihrer Richtung alternieren. Die elektrischen Felder durchdringen bei geeigneter Anordnung ein kleineres Volumen als ein vergleichbares elektrisches Feld, das durch das Einbringen einer herkömmlichen Anordnung von Elektroden erzeugt wird. Bei gleichen Stromdichten ergibt sich daher in der erfindungsgemäßen Ausführung eine geringere *Joulesche* Wärme.

Besteht die Wand aus einem homogenen Material bildet sich, wie in **Fig. 2b** dargestellt, ein alternierendes Kraftfeld. Dieses ruft nur lokale Strömungen mit einer alternierenden Strömungsrichtung hervor, die zu keiner Nettoströmung entlang der Oberfläche des Substrats führen.

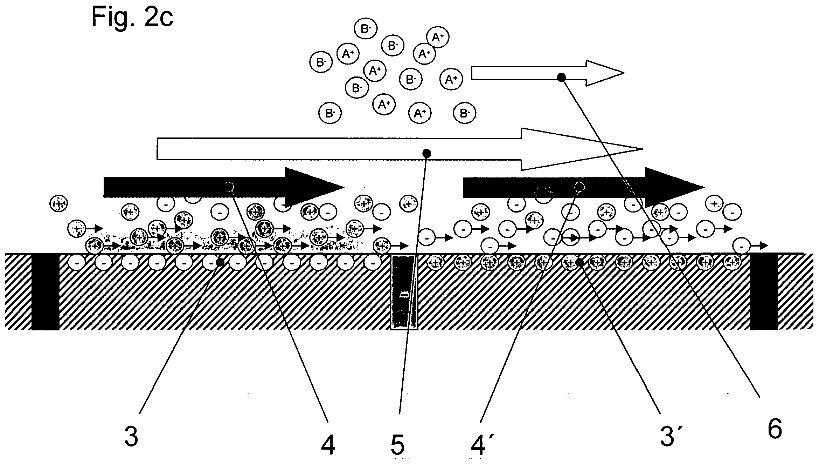

In **Fig. 2c** ist schematisch das Prinzip einer bevorzugten Anordnung gezeigt. Zwischen zwei Elektroden befinden sich jeweils alternierend Bereiche mit positiver und negativer Oberflächenladung. In der elektrischen Doppelschicht oberhalb der Oberfläche des Substrats bildet sich entsprechend alternierend ein Überschuss an negativen und positiven Ionen. Zusammen mit den in ihrer Richtung alternierenden elektrischen Feldern ergibt sich eine Kraftwirkung, die entlang der gesamten Oberfläche gleichgerichtet ist und somit zu einer Nettoströmung der Flüssigkeit führt.

Befindet sich innerhalb oder außerhalb der elektrischen Doppelschicht eine Mischung von zumindest teilweise elektrisch geladenen Teilchen, so kann diese in der erfindungsgemäßen Anordnung ohne Auftrennung nach ihren Spezies transportiert werden. Dies ist zum einen darin begründet, dass die Teilchen sich außerhalb der Reichweite des elektrischen Feldes befinden und sich dann nur mit der elektroosmotischen Geschwindigkeit bewegen. Zum anderen findet ein Transport ohne Trenneffekt auch unter Einfluss des elektrischen Feldes statt. Die Teilchen bewegen sich dann mit der Überlagerung der elektroosmotischen Geschwindigkeit und ihrer spezifischen elektrophoretischen Geschwindigkeit. Da die elektrischen Felder jedoch alternierend angeordnet sind, alterniert auch die Richtung der elektrophoretischen Geschwindigkeit, so dass sich der Trenneffekt im Mittel aufhebt.

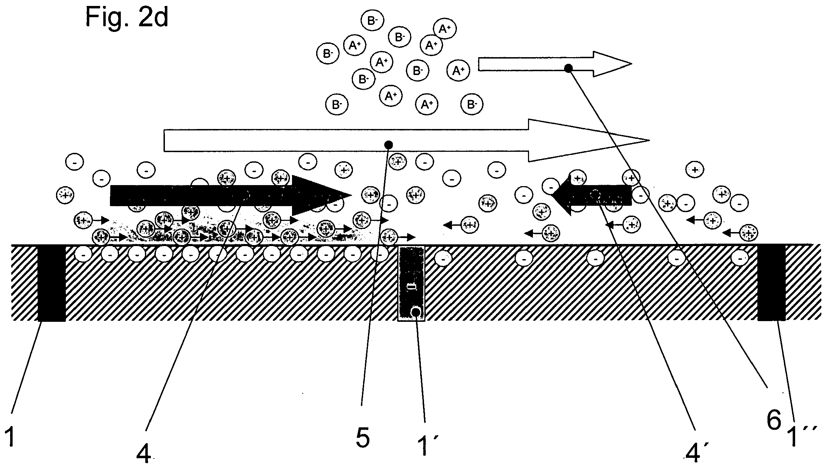

Um Nettoströmung zu erzielen, ist es allerdings nicht unbedingt erforderlich, die Wandladungen in einer derart ausgeprägten Weise zu alternieren. Selbst wenn die Oberflächenladungen überall dasselbe Vorzeichen besitzen, sich der Betrag der Oberflächenladungsdichte jedoch unterscheidet, führt dies gemäß **Fig. 2d** zu einer Nettoströmung, da sich die gegensinnigen Strömungen, die jeweils zwischen zwei benachbarten Elektrodenpaaren auftreten, nicht vollständig kompensieren. Ein möglicher elektrophoretischer Transport von zumindest teilweise elektrisch geladenen Teilchen findet auch bei dieser Anordnung gemäß den Anmerkungen zur **Fig. 2b** statt.

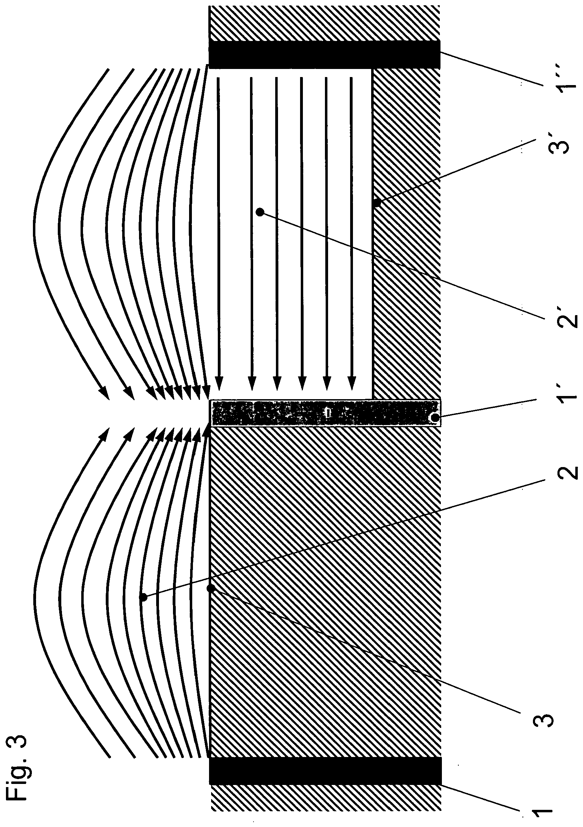

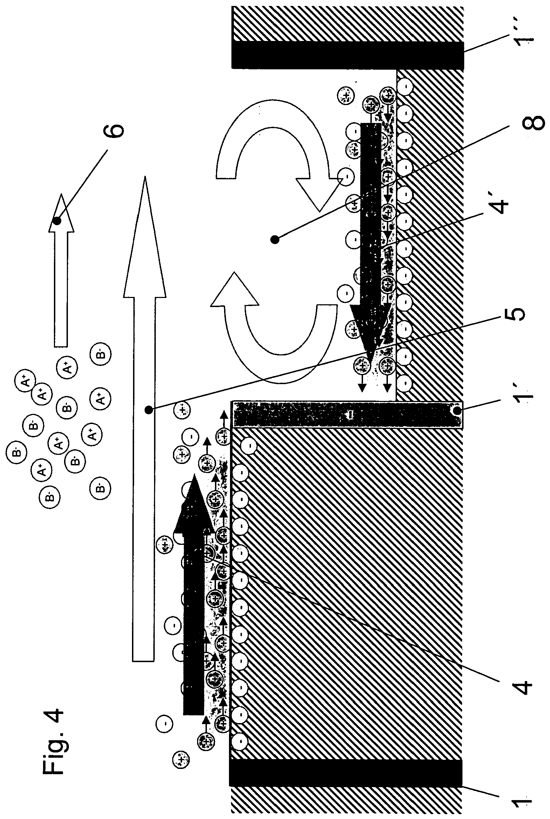

Anstatt alternierend unterschiedliche Materialien für benachbarte Bereiche auf der Oberfläche des Substrats zu wählen oder zusätzlich hierzu kann die Geometrie der Oberfläche in geeigneter Weise alternierend so ausgeführt werden, dass sich eine Nettoströmung und/oder ein gewünschter elektrophoretischer Teilchenstrom einstellt. **Fig. 3 und Fig. 4** zeigen eine Ausführung, bei der die Oberfläche aus einem homogenen Material besteht. Alternierend wird die Oberfläche zwischen einem Elektrodenpaar eben ausgeführt und zwischen jeweils hierzu benachbarten Elektrodenpaaren eine Vertiefung in die Oberfläche eingebracht, deren Tiefe dem Abstand der Elektroden in einem Elektrodenpaar entspricht. **Fig. 3** zeigt schematisch die elektrischen Felder, die sich bei einer derartigen Anordnung einstellen.

Für den Strömungsantrieb ist nur diejenige Komponente des elektrischen Felds maßgeblich, die tangential zur Oberfläche des Substrats steht. Daher bildet sich, wie in **Fig. 4** dargestellt, in der Vertiefung ein Strömungswirbel aus, der die Nettoströmung der Flüssigkeit tangential zur Oberfläche verstärkt. Eine Mischung zumindest teilweise geladener Teilchen wird bei einer derartigen Anordnung ohne elektrophoretische Trennung transportiert.

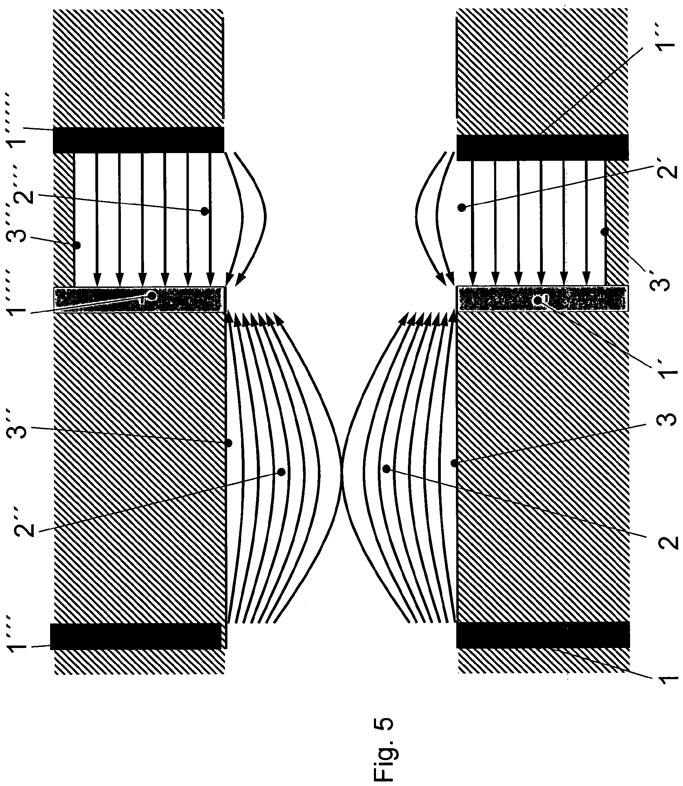

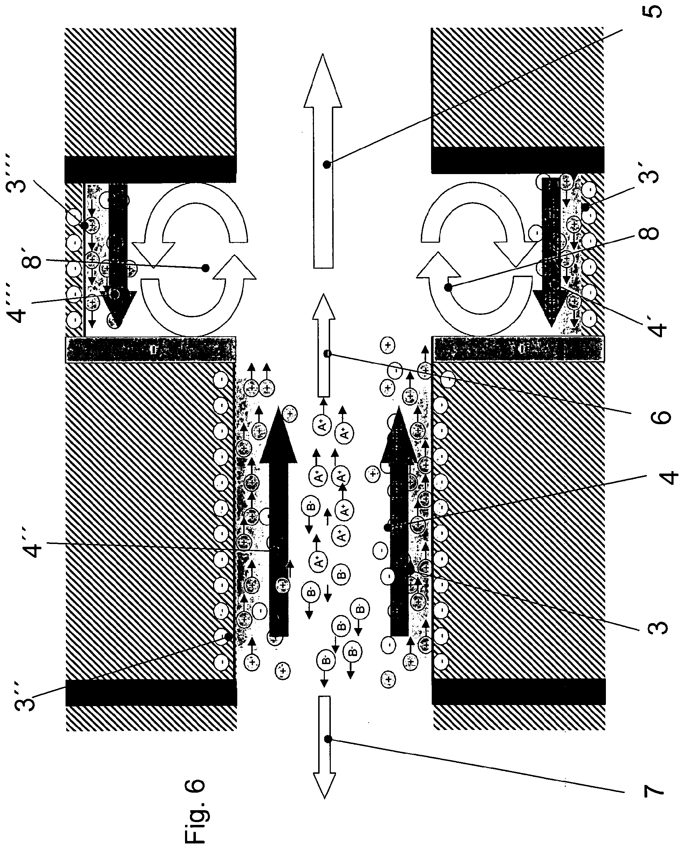

Eine weitere vorteilhafte Ausgestaltung bietet sich an, wenn die Aufgabe einer solchen Anordnung in einer elektrophoretischen Trennung von zumindest teilweise elektrisch geladenen Teilchen besteht. Dann genügt es, die Anordnung aus **Fig. 3** zusätzlich auf die gegenüberliegende Seite zu duplizieren und die Elektrodenabstände zu variieren. Die resultierenden elektrischen Felder einer solchen Anordnung zeigt schematisch **Fig. 5**. Zwischen den oberen und unteren Oberflächen (Wänden) bilden sich gleichsinnige elektrische Felder aus, die sich überlagern. Im Raum außerhalb der Vertiefungen ist kein elektrisches Feld vorhanden, da die Eindringtiefe der elektrischen Felder mit dem Elektrodenabstand korreliert ist. Daraus resultiert, wie in **Fig. 6** dargestellt, eine elektroosmotische Strömung. In den Vertiefungen bilden sich Strömungswirbel aus, die die Strömung entlang der Wände verstärken. Eine Mischung zumindest teilweise elektrisch geladener Teilchen ist nur über den Wänden einem elektrischen Feld ausgesetzt, die aufeinander folgenden Felder weisen immer die gleiche Richtung auf, wodurch eine elektrophoretische Trennung erzielt werden kann.

Weiterhin umfasst die Erfindung Anordnungen von Elektroden und Materialien auf der Oberfläche des Substrats, bei denen der elektroosmotische Flüssigkeitsströmungsantrieb bzw. der elektrophoretische Stofftransport eingesetzt wird, um neben dem Flüssigkeits- und/oder Teilchentransport wenigstens zwei weitere Grundfunktionen eines *Lab on a Chip* bereitzustellen. Zu den *Grundfunktionen* gehören insbesondere elektrophoretische Trennung von zumindest teilweise elektrisch geladenen Teilchen, Fokussierung und Aufkonzentrierung, Strömungsmischung, Strömungsaufteilung, -abzweigung und -kreuzung, Dosierung, Markierung, Reaktion und Analyse oder Detektion.

Die Erfindung umfasst einen frei programmierbaren *Lab on a Chip,* der aus einer matrixförmigen Anordnung aus elektroosmotischen Flüssigkeitsströmungsantrieben bzw. elektrophoretischen Teilchenstromantrieben besteht, die den gesamten Flüssigkeits- und/oder Teilchenstrom auf dem Chip sowie die Mischung von Reagenzien, die Analyse von zumindest teilweise elektrisch geladenen Teilchen und die Zuführung von Proben zu Sensoren übernehmen.

Die erfindungsgemäße Anordnung und das Verfahren zu ihrem Betrieb lassen sich vorteilhaft mit einem frei programmierbaren elektronischen Chip vergleichen. Der Niederspannungselektroosmoseantrieb bzw. -elektrophoreseantrieb entspricht in seiner Funktion den Transistoren und Leiterbahnen. Der Chip selbst erhält seine volle Funktion jedoch erst durch die elektronische Beschaltung, der Zu- und Abfuhr von Flüssigkeiten und/oder zumindest teilweise elektrisch geladenen Teilchen und durch aufgebrachte Sensoren.

Eine weitere Verwendung der Anordnung besteht in der lokalen Kühlung eines angrenzenden mikroelektronischen Bauteils oder Prozessors.

Das erfindungsgemäße Verfahren besitzt die folgenden Vorteile:

- Der Flüssigkeitsantrieb durch Elektroosmose und der Teilchentransport/ -trennung durch Elektrophorese arbeiten bei niedrigen Spannungen.
- Die erzeugten elektrischen Felder nehmen weniger Raum ein im Vergleich zu bekannten Verfahren.
- Das *Lab on a Chip* weist geringe Abmessungen auf.
- Das *Lab on a Chip* lässt sich so ausgestalten, dass es in weiten Grenzen frei programmierbar und damit flexibel ist.

Die Erfindung wird im Folgenden anhand von Ausführungsbeispielen und den Figuren erläutert. Die Figuren zeigen im Einzelnen:

Fig. 1a     Elektrisches Feld zwischen zwei in einer Flüssigkeit eingebrachten Elektroden (Stand der Technik).

Fig. 1b     Flüssigkeitsströmung aufgrund des Vorhandenseins einer elektrischen Doppelschicht und der elektrophoretische Trennung einer Mischung von zumindest teilweise elektrisch geladenen Teilchen in einem elektrischen Feld gemäß **Fig. 1a** (Stand der Technik).

Fig. 2a     Elektrische Felder zwischen Elektroden, die an der Oberfläche des Substrats angebracht sind und deren Gleichspannungen alternierend zueinander angeordnet sind.

Fig. 2b     Flüssigkeitsströmung aufgrund einer elektrischen Doppelschicht entlang der Oberfläche des Substrats mit Bereichen homogener Oberflächenladung in einem elektrischen Feld gemäß **Fig. 2a.**

Fig. 2c     Flüssigkeitsströmung aufgrund einer elektrischen Doppelschicht und elektrophoretischer Transport von zumindest teilweise elektrisch geladenen Teilchen entlang der Oberfläche eines Substrats mit Bereichen alternierender Wandladung in einem elektrischen Feld gemäß **Fig. 2a.**

Fig. 2d     Flüssigkeitsströmung und elektrophoretischer Transport von zumindest teilweise elektrisch geladenen Teilchen aufgrund einer elektrischen Doppelschicht entlang einer Oberfläche eines Substrats mit Bereichen unterschiedlicher Oberflächenladung in einem elektrischen Feld gemäß **Fig. 2a.**

Fig. 3     Elektrische Felder in einem Kanal zwischen Elektroden, die zwischen Oberflächen mit alternierender Höhe und mit alternierender Gleichspannung zueinander angeordnet sind.

Fig. 4     Flüssigkeitsströmung aufgrund einer elektrischen Doppelschicht und elektrophoretische Trennung von zumindest teilweise elektrisch geladenen Teilchen entlang von Oberflächen eines Substrats mit alternierender Höhe in einem elektrischen Feld gemäß **Fig. 3.**

Fig. 5     Elektrische Felder zwischen Elektroden, die an der Oberfläche des Substrats angebracht sind und deren Spannungen alternierend zueinander angeordnet sind. Die Elektrodenpaare sind an zwei gegenüberliegenden Seiten eines Kanals angebracht.

Fig. 6     Flüssigkeitsströmung aufgrund einer elektrischen Doppelschicht und elektrophoretischer Trennung von zumindest teilweise elektrisch geladenen Teilchen entlang von Oberflächen mit alternierender Höhe in einem elektrischen Feld gemäß **Fig. 5.**

Fig. 7     Schematischer Aufbau eines *Lab on a Chip* in schachbrettartiger Anordnung.

Fig. 8a-f     Flüssigkeitsströme bzw. elektrophoretische Teilchenströme auf dem gesamten Chip bzw. aus ausgewählten Segmenten des Chips.

Fig. 9a-c     Abzweigungen in den Flüssigkeitsströmen bzw. elektrophoretische Teilchenströmen auf dem Chip.

Fig.10a-b     Flüssigkeitsströme bzw. elektrophoretische Teilchenströme auf dem Chip mit Einmündungen.

Fig.11a-d     Kreuzung von Flüssigkeitsströmen bzw. elektrophoretische Teilchenströmen auf dem Chip.

Fig.12a-b     Strömungsmischung oder Dosierung/Markierung durch Laminierung.

Fig. 13     Strömungsmischung durch Rückvermischung.

Fig. 14     Strömungsmischung durch Sekundärströmung.

Fig. 15     Fokussierung einer Mediums/Spezies durch seitliche Zufuhr zweier Flüssigkeitsströmungen.

Fig.16a-e     Konzept eines *Lab on a Chip* zur Analyse von Ionen.

In den **Fig. 1 bis Fig. 6** repräsentieren Kreise mit + positiv geladene Ionen und mit - negativ Ionen in der elektrischen Doppelschicht bzw. an der Oberfläche (Wand) des Substrats. Kreise mit A+ repräsentieren dagegen positive und Kreise mit B- negativ geladene Teilchen innerhalb oder außerhalb der elektrischen Doppelschicht.

**Fig. 1a und Fig. 1b** stellen den Stand der Technik dar. Werden jeweils zwei benachbarte Elektroden **1, 1'** mit einer positiven und negativen Gleichspannung beaufschlagt, ergibt sich ein elektrisches Feld **2**. Ist eine homogene Oberflächenladung an der Oberfläche **3** vorhanden, bildet sich in der elektrischen Doppelschicht ein Kraftfeld **4** aus, das eine Strömung **5** verursacht. Positiv geladene Teilchen wandern in Richtung **6** der negativ geladenen Elektrode. Negativ geladene Teilchen wandern in Richtung **7** der positiv geladenen Elektrode.

In **Fig. 2a** befinden sich zwei Elektrodenpaare **1, 1'** und **1', 1"**, die in der Wand integriert sind. Die Elektrodenpaare werden jeweils mit einer positiven und einer negativen Gleichspannung beaufschlagt und es bilden sich zwei alternierende elektrische Felder **2, 2'** aus.

In **Fig. 2b** besitzen die Oberflächen **3, 3'** zwischen den Elektrodenpaaren **1, 1'** und **1', 1"** eine homogene Oberflächenladung. Es bilden sich in der elektrischen Doppelschicht zwei alternierende Kraftfelder **4, 4'** aus. Diese rufen nur lokale Strömungen **5, 5'** mit alternierender Richtung hervor, die zu keiner Nettoströmung führen.

Sind jedoch die Oberflächen **3, 3'**, wie in **Fig. 2c** abgebildet, mit einer alternierenden Oberflächenladung versehen, ergeben sich zusammen mit den alternierenden elektrischen Feldern **2, 2'** die gleichgerichteten Kraftfelder **4, 4'**. Daraus resultiert eine Nettoströmung **5**. Die elektrisch geladenen Teilchen außerhalb der Grenzschicht bewegen sich im Mittel in Richtung und mit der Geschwindigkeit der Nettoströmung **6**.

In **Fig. 2 d** besitzen die Oberflächenladungen zwar überall dasselbe Vorzeichen, der Betrag der Oberflächenladungsdichten unterscheidet sich jedoch. Daraus resultiert ebenfalls eine Nettoströmung **5,** da sich die alternierenden Kraftfelder **4, 4'**, die jeweils zwischen den benachbarten Elektrodenpaaren **1, 1'** und **1', 1"** auftreten, nicht vollständig kompensieren. Die elektrisch geladenen Teilchen außerhalb der Grenzschicht bewegen sich im Mittel in Richtung und mit der Geschwindigkeit der Nettoströmung **6**.

In **Fig. 3** ist die Geometrie der Oberflächen **3, 3'**, die eine homogene Oberflächenladung besitzen, alternierend so ausgeführt, dass daraus die elektrischen Felder **2, 2'** resultieren. Alternierend wird die Oberfläche zwischen dem Elektrodenpaar **1, 1'** eben ausgeführt und zwischen dem hierzu benachbarten Elektrodenpaar **1', 1"** eine Vertiefung in die Oberfläche eingebracht.

In **Fig. 4** sind die so entstehenden Kraftfelder **4, 4'** dargestellt. In der Vertiefung bildet sich ein Strömungswirbel **8** aus, der die Nettoströmung **5** der Flüssigkeit verstärkt. Die elektrisch geladenen Teilchen außerhalb der Grenzschicht durchlaufen die alternierenden Felder. Daher bewegen sie sich im Mittel in Richtung und mit der Geschwindigkeit der Nettoströmung **6**.

In **Fig. 5** ist eine Anordnung mit zwei gegenüberliegenden Seiten, die jeweils eine erfindungsgemäße Oberfläche aufweisen, dargestellt, der eine horizontale Symmetrie aufweist. Dazu werden die Oberflächen **3, 3'** bzw. **3", 3'''** alternierend so ausgeführt, dass sich eine Vertiefung ergibt. Zwischen den Elektrodenpaaren **1, 1'** und **1', 1"** bzw. **1''', 1''''** und **1'''', 1'''''** werden alternierende Gleichspannungen angelegt, so dass daraus die elektrischen Felder **2, 2', 2", 2'''** resultieren. Die elektrischen Felder **2', 2'''** dringen kaum in die Flüssigkeit ein, da der Elektrodenabstand zwischen den betreffenden Elektroden klein ist.

In **Fig. 6** sind die aufgrund der homogenen Oberflächenladung der Wände **3, 3', 3", 3'''** entstehenden Kraftfelder **4, 4', 4", 4'''** dargestellt. In den Vertiefungen bilden sich die Strömungswirbel **8, 8'** aus, die die Nettoströmung **5** unterstützen. Eine Mischung aus zumindest teilweise elektrisch geladenen Teilchen zwischen den Wänden **3, 3'** und **3", 3'''** durchläuft nur elektrische Felder in einer Richtung. Daher bewegen sich die Teilchen relativ zur Geschwindigkeit der Nettoströmung **5** je nach Ladung in Richtung **6** oder in Richtung **7**.

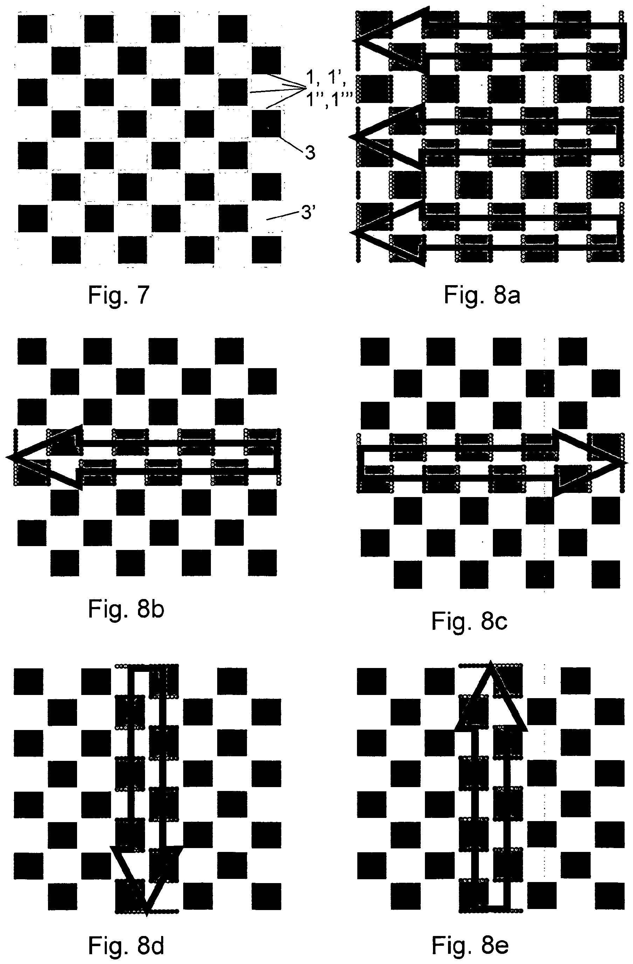

**Fig. 7** zeigt schematisch den Aufbau eines *Lab on a Chip* in schachbrettartiger Anordnung. Die Oberfläche ist hierzu in quadratische Bereiche **3, 3'** strukturiert, wobei sich Bereiche **3** mit positiver Oberflächenladung und Bereiche **3'** mit negativer Oberflächenladung abwechseln. Jeder einzelne Bereich **3, 3'** ist von vier einzelnen Elektroden **1, 1', 1", 1'''** umgeben, die individuell ansteuerbar sind. Die Ausgestaltung befindet sich z.B. plansymmetrisch in Boden und Deckel des Lab on Chip.

Die Strömungsrichtung bzw. die elektrophoretische Teilchenstromrichtung wird in den folgenden Beispielen symbolisch durch die Angabe von Himmelsrichtungen verdeutlicht, wobei *Norden* einer Strömung bzw. des Teilchenstroms nach oben entspricht.

Die Grundfunktionen *Flüssigkeitstransport und/oder elektrophoretischer Teilchentransport* sind in den **Fig. 8a** bis **6f** dargestellt:

- **Fig. 8a** zeigt die angelegten Spannungen, die eine Flüssigkeitsströmung bzw. einen elektrophoretischen Teilchenstrom in *Ost-West*-Richtung auf dem gesamten Chip-Segment erzeugen.
- **Fig. 8b** zeigt die angelegten Spannungen, die eine Flüssigkeitsströmung bzw. einen elektrophoretischen Teilchenstrom in *Ost-West*-Richtung auf einem Streifen des Chip-Segments erzeugen.
- **Fig. 8c** zeigt die angelegten Spannungen, die eine Flüssigkeitsströmung bzw. einen elektrophoretischen Teilchenstrom in *West-Ost*-Richtung auf einem Streifen des Chipsegments erzeugen.
- **Fig. 8d** zeigt die angelegten Spannungen, die eine Flüssigkeitsströmung bzw. einen elektrophoretischen Teilchenstrom in *Nord-Süd*-Richtung auf einem Streifen des Chipsegments erzeugen.
- **Fig. 8e** zeigt die angelegten Spannungen, die eine Flüssigkeitsströmung bzw. einen elektrophoretischen Teilchenstrom in *Süd-Nord*-Richtung auf einem Streifen des Chipsegments erzeugen.

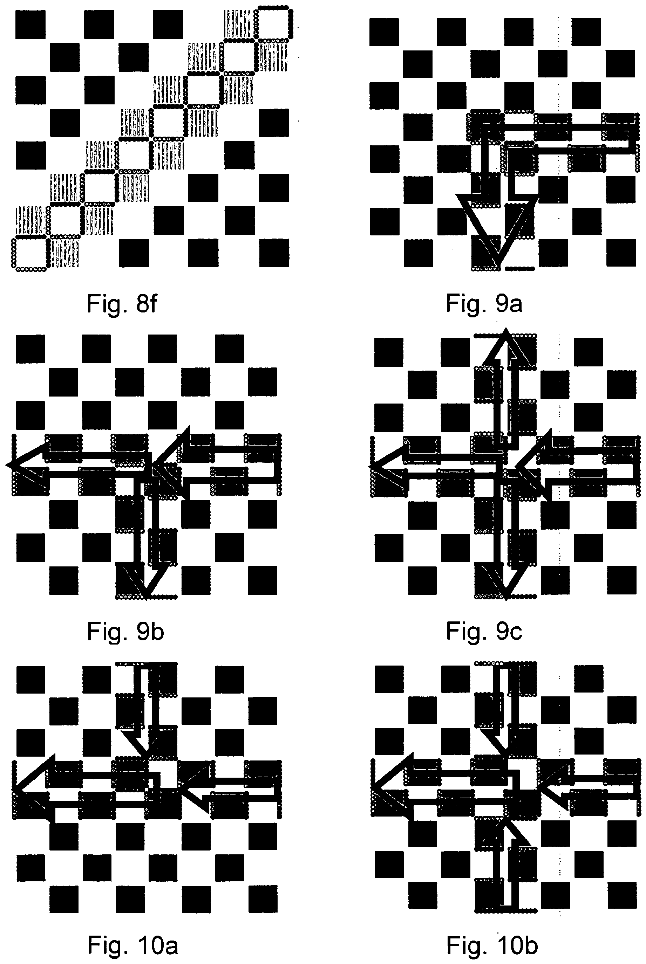

- **Fig. 8f** zeigt die angelegten Spannungen, die eine Flüssigkeitsströmung bzw. einen elektrophoretischen Teilchenstrom in diagonaler Richtung von *Südwest* nach *Nordost* auf einem Streifen des Chipsegments erzeugen.

Die Grundfunktionen *Strömungsabzweigung und -verzweigung und/oder Ab- und Verzweigungen eines elektrophoretischen Teilchenstroms* sind in den **Fig. 9a** bis **9c** dargestellt:

- **Fig. 9a** zeigt die angelegten Spannungen für eine Flüssigkeitsströmung bzw. einen elektrophoretischen Teilchenstrom. Ausgehend von der *Ost-West-Richtung* wird ein Teilstrom in die *Nord-Süd-Richtung* umgelenkt.
- **Fig. 9b** zeigt die angelegten Spannungen für eine Flüssigkeitsströmung bzw. einen elektrophoretischen Teilchenstrom. Ausgehend von der *Ost-West-Richtung* zweigt ein Teilstrom in die *Nord-Süd-Richtung* ab.
- **Fig. 9c** zeigt die angelegten Spannungen für eine Flüssigkeitsströmung bzw. einen elektrophoretischen Teilchenstrom. Ausgehend von der *Ost-West-Richtung* zweigt jeweils ein Teilstrom in die *Nord-Süd-Richtung* und in die *Süd-Nord-Richtung* ab.

Die Grundfunktionen *Strömungseinmündung und/oder Einmündung des elektrophoretischen Teilchenstroms* sind den **Fig. 10a** und **10b** dargestellt:

- **Fig. 10a** zeigt die angelegten Spannungen für eine Flüssigkeitsströmung bzw. einen elektrophoretischen Teilchenstrom in *Ost-West*-Richtung. Es mündet ein Teilstrom aus der Nord-Süd-Richtung ein.
- **Fig. 10b** zeigt die angelegten Spannungen für eine Flüssigkeitsströmung bzw. einen elektrophoretischen Teilchenstrom in *Ost-West*-Richtung. Es mündet die jeweils ein Teilstrom aus der *Nord-Süd-* und aus der *Süd-Nord*-Richtung ein.

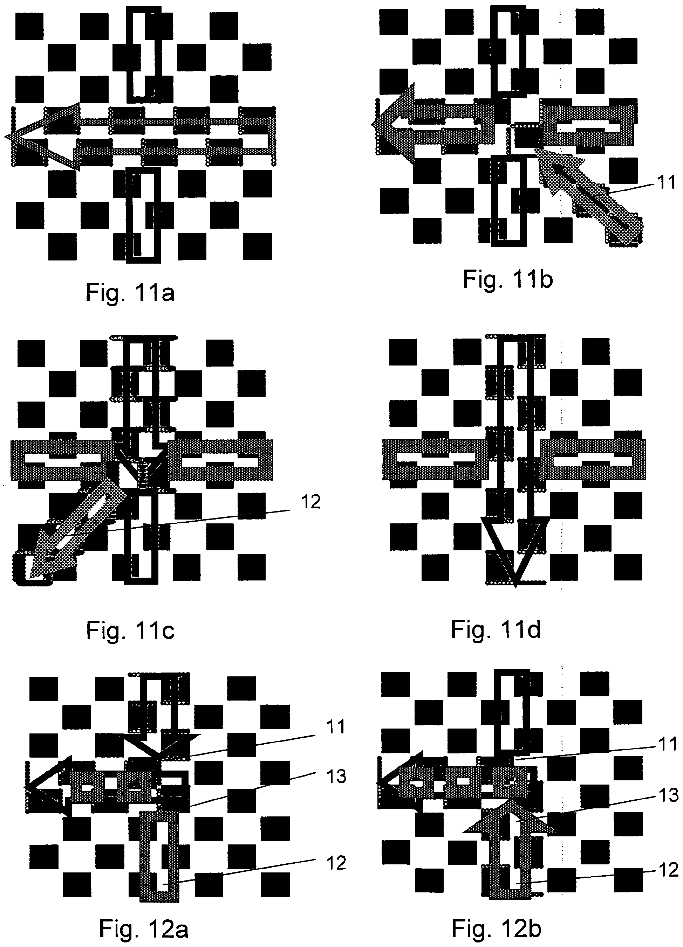

Die Grundfunktion *Strömungskreuzung und/oder Kreuzung elektrophoretischer Teilchenströme* werden am Beispiel einer Ampel erläutert. Die **Fig. 11a** bis **11d** zeigen die zeitliche Abfolge, wie zwei Strömungen und/oder Teilchenströme gekreuzt werden, ohne sich dabei zu mischen. Werden besondere Forderungen an die Reinheit der Strömungen bzw. der Ströme gestellt, wird der Kreuzungsbereich zusätzlich gespült.

Dargestellt ist, wie ein erster Strömungsfluss bzw. Teilchenstrom durch die Kreuzung angehalten und dann ein zweiter, hierzu senkrechter Strömungsfluss bzw. Teilchenstrom durch dieselbe Kreuzung geführt wird:

- **Fig. 11a** zeigt eine Strömung/einen Teilchenstrom in *Ost-West*-Richtung.
- **Fig. 11b** zeigt, wie die Strömung bzw. der Teilchenstrom in *Ost-West*-Richtung angehalten werden. Der Kreuzungsbereich mit anschließend mit einer Spülflüssigkeit **10** gefüllt.
- **Fig. 11c** zeigt, wie die Unterbrechung des Strömungsflusses bzw. des Teilchenstroms in *Nord-Süd*-Richtung durch den Abzug einer Drainageflüssigkeit **11** geschlossen wird.
- **Fig. 11d** zeigt eine Strömung/einen Teilchenstrom in Nord-Süd-Richtung. Der in den **Fig. 11a** bis **11d** beschriebene Vorgang kann so fortgesetzt werden, dass abwechselnd Strömung bzw. Teilchenstrom in *Ost-West-* und *Nord-Süd*-Richtung fließen. Eine derartige periodische Wiederholung führt zu einer kontinuierlichen Kreuzung zweier Ströme bzw. Teilchenströme, ohne dass diese gemischt werden.

Die Grundfunktionen *Strömungsmischer bzw. Mischung von zumindest teilweise elektrisch geladenen Teilchen* werden an den Beispielen aus den **Fig. 12a** bis **15** erläutert. Strömungen lassen sich in einer erfindungsgemäßen Ausgestaltung durch Laminierung mischen. Die zu mischenden Flüssigkeiten werden abwechselnd orthogonal zu einer Querströmung gefördert, so dass anschließend durch Diffusion eine Vermischung in Richtung der Querströmung erfolgt.

**Fig. 12a** zeigt die Strömung des Mediums **12** in *Nord-Süd-Richtung* und die Querströmung **13** in *Ost-West-Richtung,* das Medium **14** ist in Ruhe.

**Fig. 12b** zeigt die Strömung des Mediums **12'** in Süd-Nord-Richtung und die Querströmung **13'** in *Ost-West-Richtung,* das Medium **14'** ist in Ruhe. Dieser Vorgang kann mehrfach wiederholt werden. Durch analoge Betriebsweise können Teilchenströme vom zumindest teilweise elektrisch geladenen Teilchen in einer Querströmung mit wechselnden Schichten laminiert angeordnet und vermischt bzw. transportiert werden. Weiterhin wird durch analoge Betriebsweise eine erste Teilchensorte in eine zweite Teilchensorte dosiert oder der Ort in einer Flüssigkeit oder die Flüssigkeit selbst markiert.

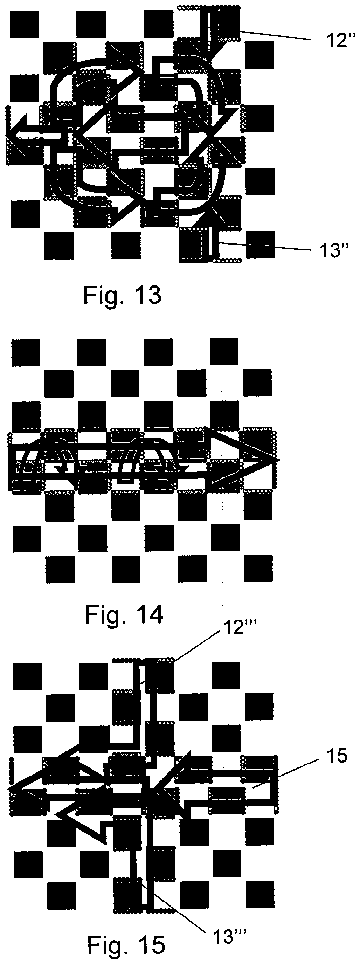

In einer weiteren Ausgestaltung werden Strömungen gemäß **Fig. 13** durch Rückvermischung gemischt. Die Strömungen **12"**, **13"** werden zunächst in einer Strömungseinmündung zusammengeführt. Der Strömung wird ein großer Teil in einer Abzeigung entnommen und stromaufwärts in einer Einmündung wieder zugeführt. Durch analoge Betriebsweise lassen sich Teilchenströme von zumindest teilweise elektrisch geladenen Teilchen vermischen.

In einer weiteren Ausgestaltung werden Strömungen gemäß **Fig. 14** durch Sekundärströmungen in der vertikalen Richtung gemischt werden. Die Hauptströmung fließt hier in *West-Ost*-Richtung. An der Wand wird eine überlagerte Strömung in *Süd-Nord*-Richtung erzeugt, die sich nur durch eine wandnormale Strömung und eine Strömung mit umgekehrter Richtung in wandferne Schichten schließen kann.

In einer weiteren Ausgestaltung werden gemäß **Fig. 15** Teilchenströme in Strömungen fokussiert. Dazu wird ein Teilchenstrom **15** in *Ost-West-Richtung* gefördert. Aus der *Nord-Richtung* und aus der *Süd-Richtung* werden die Strömungen **12'''**, **13'''** dem Teilchenstrom zugeführt, der so fokussiert wird.

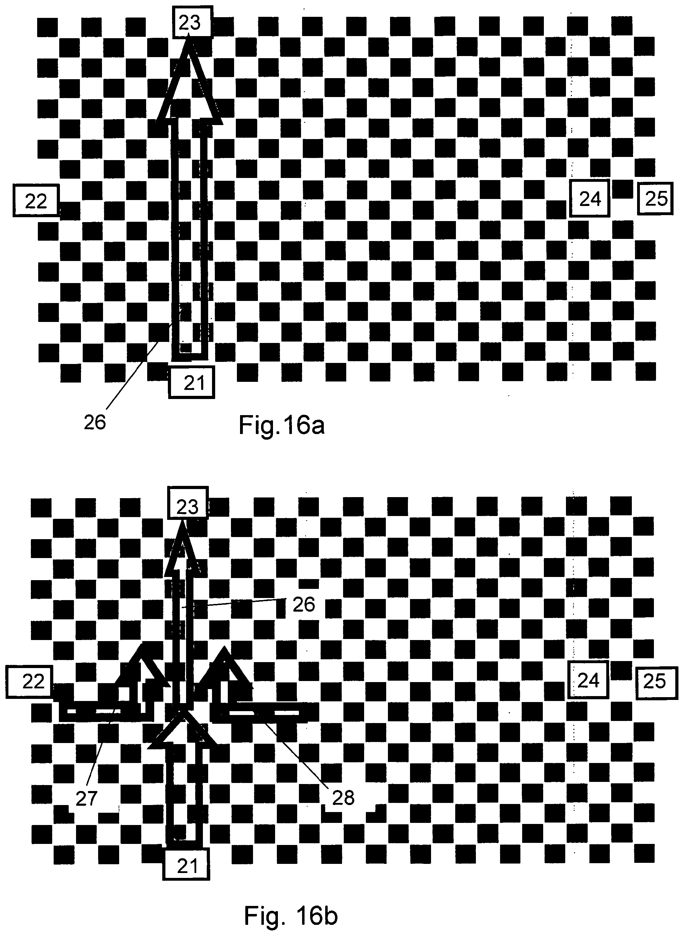

**Fig. 16a-e** zeigen eine vollständige Anwendung bestehend aus einzelnen Grundfunktionen zur Analyse einer Ionenmischung. Dazu wird die Ausgestaltung gemäß **Fig. 7** eingesetzt. An die Struktur gemäß **Fig. 7** schließen sich die Reservoire **21, 22, 23, 25** an. Weiterhin ist ein Leitfähigkeitsdetektor **24** in die Struktur integriert. Die Struktur und die Reservoire **22, 23, 25** sind mit einem Puffer gefüllt. Das Reservoir **21** ist mit einer Ionenmischung gefüllt, die in ihrer Zusammensetzung analysiert werden soll. Alle im Folgenden beschriebenen Vorgänge werden durch die Steuerung mittels elektrischer Felder im Boden und im Deckel des *Lab on a Chip* realisiert.

**Fig. 16a** zeigt den Transport der Ionenmischung aus dem Reservoir **21** in Richtung des Reservoirs **23.** Hierzu werden eine Strömung bzw. ein Teilchenstrom **26** gemäß den **Fig. 2a und c** realisiert. Vorteilhaft ist, dass so die Ionenmischung ohne elektrophoretische Trennung auf dem *Lab on a Chip* transportiert wird.

**Fig. 16b** zeigt die Fokussierung des Teilchenstroms, da diese Anfangsbedingung sich positiv auf die Trennschärfe eines elektrophoretischen Verfahrens auswirkt. Erreicht die Ionenmischung die Mitte des *Lab on a Chip,* erfolgt eine Fokussierung gemäß **Fig. 15**. Hierzu werden zwei seitliche Flüssigkeitsströmungen **27, 28** erzeugt, die die Strömung bzw. den Teilchenstrom **26** einschnüren.

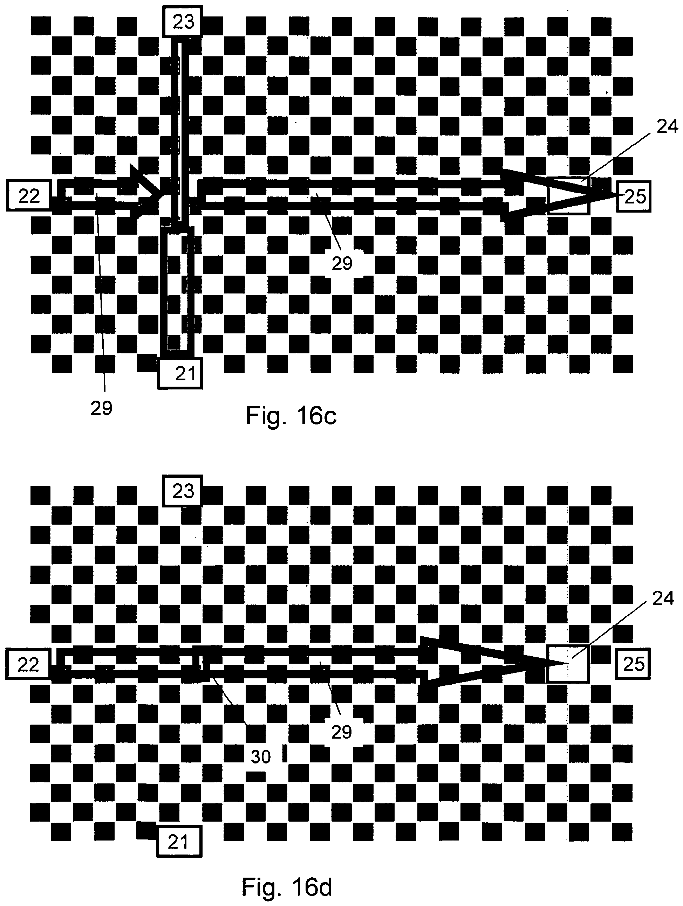

**Fig. 16c** zeigt den Beginn des Trennprozesses. Hierzu erfolgt in der Mitte des *Lab on a Chips* eine Strömung **29** von Reservoir **22** zum Reservoir **25** gemäß **Fig. 2a und c.** Dadurch wird ein kleiner Pfropfen aus dem fokussierten Teilchenstrom herausgelöst und in Richtung des Reservoirs **25** bzw. des Leitfähigkeitsdetektors **24** gefördert.

**Fig. 16d** zeigt den Trennprozess. Hierzu werden die Elektroden zwischen dem Reservoir **22** zum Reservoir **25** gemäß **Fig. 6a und b** verschaltet. Der Pfropfen **30** der Ionenmischung durchläuft damit nur gleichgerichtete elektrische Felder.

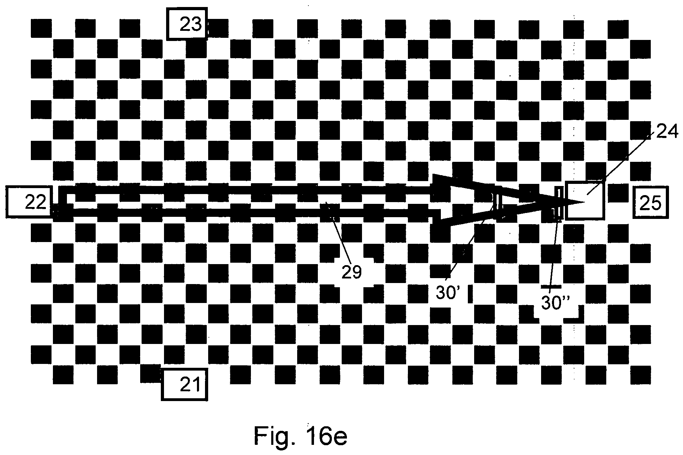

Dies führt zu einer Situation, wie sie in **Fig. 16e** dargestellt ist. Der Pfropfen **30** trennt sich aufgrund der spezifischen Mobilitäten in seine Bestandteile **31** und **32** auf. Die Bestandteile erreichen zu unterschiedlichen Zeiten den Leitfähigkeitsdetektor **24**. Die hierfür erforderliche Zeit ist daher charakteristisch für den Inhaltsstoff, während die festgestellte Leitfähigkeit proportional zur Konzentration der Bestandteile ist.

**Patentansprüche**

1. Anordnung zur Erzeugung von Flüssigkeitsströmungen, die frei bewegliche elektrische Ladungen beinhaltet, und ein Substrat enthält, das bei Kontakt mit einer Flüssigkeit, die frei bewegliche elektrische Ladungen beinhaltet, eine elektrische Doppelschicht ausbildet, mit steuerbaren Mitteln zur Bereitstellung von elektrischen Spannungen für eine Vielzahl von sich auf der Oberfläche des Substrats befindlichen Paaren von Elektroden(1, 1'; 1", 1'''), die jeweils zwischen zwei Bereichen auf der Oberfläche des Substrats angeordnet sind und die bei Anlegen einer Spannung ein elektrisches Feld erzeugen, das innerhalb der elektrischen Doppelschicht, eine Kraft auf den an die Oberfläche des Substrats angrenzenden Teil der Flüssigkeit ausübt, wobei die Oberfläche des Substrats in Form eines zweidimensionalen Arrays als eine Matrix in Bereiche (3, 3') untergliedert ist, die sich in Betrag oder Vorzeichen ihrer Oberflächenladung oder in ihrer Höhe über dem Substrat unterscheiden, wobei jeder einzelne Bereich von vier einzelnen Elektroden (1, 1'; 1", 1''') umgeben ist, die individuell ansteuerbar sind.

2. Anordnung nach Anspruch 1, **dadurch gekennzeichnet**, die Oberfläche des Substrats aus einem Halbleiter besteht, dessen Oberflächenladung in den Bereichen einzeln oder in Gruppen mittels der steuerbaren Mittel oder mittels zweiter steuerbarer Mittel einstellbar ist.

3. Anordnung nach einem der Ansprüche 1 bis 2, dass von zwei benachbarten Bereichen einer aus Glas und der andere aus einem Metalloxid mit positiver Oberflächenladung besteht.

4. Anordnung nach einem der Ansprüche 1 bis 3, **dadurch gekennzeichnet, dass** zwei benachbarte Bereiche aus Polymeren mit unterschiedlicher Oberflächenladung bestehen.

5. Anordnung nach einem der Ansprüche 1 bis 4, **dadurch gekennzeichnet, dass** zwei benachbarte Bereiche auf der Oberfläche des Substrats annähernd gleiche Abmaße aufweisen.

6. Anordnung nach einem der Ansprüche 1 bis 5, **dadurch gekennzeichnet, dass** die Bereich schachbrettartig auf der Oberfläche des Substrats angeordnet sind.

7. Vorrichtung, die durch mindestens zwei Anordnungen nach einem der Ansprüche 1 bis 6, zwischen denen sich die Flüssigkeit befindet, begrenzt ist..

8. Verfahren zur Herstellung einer Anordnung nach einem der Ansprüche 1 bis 7, mit den Schritten:

    a) Bereitstellen des Substrats,
    b) Aufbringen von steuerbaren Mitteln zur Beschaltung der Vielzahl der Elektroden, die

c) in Paaren auf die Oberfläche des Substrats aufgebracht werden,

d) Behandeln der Oberfläche des Substrats derart, dass die Oberfläche des Substrats in Form einer Matrix so in Bereiche untergliedert wird, dass sich zwei benachbarte Bereiche in Betrag oder Vorzeichen ihrer Oberflächenladung oder in ihrer Höhe über dem Substrat unterscheiden.

**9.** Verfahren nach Anspruch 8, **dadurch gekennzeichnet, dass** die Elektroden derart in Paaren auf die Oberfläche des Substrats aufgebracht werden, dass hierdurch die Oberfläche in Form einer Matrix in Bereiche untergliedert wird.

**10.** Verfahren nach Anspruch 8 oder 9, **dadurch gekennzeichnet, dass** von zwei benachbarten Bereichen jeweils einer mit mindestens einer Beschichtung versehen wird, deren Oberflächenladung sich in Betrag oder Vorzeichen von der Oberflächenladung der Oberfläche des Substrats unterscheidet.

**11.** Verfahren nach Anspruch 8 oder 9, **dadurch gekennzeichnet, dass** ein Substrat mit einer Oberfläche aus einem Halbleitermaterial eingesetzt wird, dessen Oberflächenladung in mindestens einem der Bereiche mittels der steuerbaren Mittel oder mittels zweiter steuerbarer Mittel eingestellt wird.

**12.** Verfahren nach Anspruch 8 oder 9, **dadurch gekennzeichnet, dass** von zwei benachbarten Bereichen jeweils einer mit einer Vertiefung versehen wird.

**13.** Verfahren zum Betrieb einer Anordnung nach einem der Ansprüche 1 bis 6 oder einer Vorrichtung nach Anspruch 7, **dadurch gekennzeichnet, dass** mindestens zwei Paare der Elektroden durch die steuerbaren Mittel derart mit einer positiven und einer negativen Potentialdifferenz versehen werden, dass die Flüssigkeit strömt und/oder die Teilchen bewegt werden.

**14.** Verfahren nach Anspruch 13, **dadurch gekennzeichnet, dass** die Paare von Elektroden einzeln oder in Gruppen angesteuert werden.

**15.** Verwendung einer Anordnung nach einem der Ansprüche 1 bis 6 oder einer Vorrichtung nach Anspruch 7 als programmierbare mikrofluidische Analyse- und/oder Syntheseeinheit.

**16.** Verwendung einer Anordnung nach einem der Ansprüche 1 bis 6 oder einer Vorrichtung nach Anspruch 7 zur Kühlung eines angrenzenden mikroelektronischen Bauteils oder Prozessors.

## Claims

**1.** Arrangement for generating liquid flows comprising freely moving electrical charges and containing a substrate which, on contact with a liquid containing freely moving electrical charges, forms an electrical double layer, with controllable means for providing electrical voltages for a multiplicity of electrode pairs (1,1'; 1"; 1''') on the surface of the substrate, which in each case are arranged between two regions on the surface of the substrate and on imposition of a voltage generate an electrical field, which inside the electrical double layer exerts a force on the part of the liquid adjacent to the surface of the substrate, wherein the surface of the substrate in the form of a two-dimensional array is subdivided, in the form of a matrix, into regions (3, 3') which differ in terms of the magnitude or sign of their surface charge or in their height above the substrate, wherein each individual region is surrounded by four individual electrodes (1, 1'; 1", 1''') which are individually controllable.

**2.** Arrangement according to claim 1, **characterised in that** the surfaces of the substrate consist of a semiconductor, the surface charge of which can be adjusted in the regions individually or in groups by way of the controllable means or by way of second controllable means.

**3.** Arrangement according to any one of claims 1 to 2, **characterised in that**, of two adjacent regions, one consists of glass and the other of a metal oxide with a positive surface charge.

**4.** Arrangement according to any one of claims 1 to 3, **characterised in that** two adjacent regions consist of polymers with different surface charges.

**5.** Arrangement according to any one of claims 1 to 4, **characterised in that** two adjacent regions on the surface of the substrate exhibit approximately equal dimensions.

**6.** Arrangement according to any one of claims 1 to 5, **characterised in that** the regions are arranged in chessboard fashion on the surface of the substrate.

**7.** Device which is delimited by at least two arrangements according to any one of claims 1 to 6, between which the liquid is located.

**8.** Method for producing an arrangement according to any one of claims 1 to 7, with the steps:

a) providing the substrate,
b) placing controllable means for the switching of the multiplicity of electrodes, which

c) are placed in pairs on the surface of the substrate,

d) treating the surface of the substrate in such a way that the surface of the substrate, in the form of a matrix, is subdivided into regions in such a way that two adjacent regions differ in terms of the magnitude or sign of their surface charge or in their height above the substrate.

9. Method according to claim 8, **characterised in that** the electrodes are arranged in pairs on the surface in such a way that, as a result, the surface is subdivided into regions in the form of a matrix.

10. Method according to claim 8 or 9, **characterised in that**, of two adjacent regions, in each case one is provided with at least one coating, the surface charge of which differs in magnitude or sign from the surface charge of the surface of the substrate.

11. Method according to claim 8 or 9, **characterised in that** a substrate is used with a surface made of a semiconductor material, of which the surface charge is adjusted in at least one of the regions by way of the controllable means or by way of second controllable means.

12. Method according to claim 8 or 9, **characterised in that**, of two adjacent regions, in each case one is provided with an indentation.

13. Method for operating an arrangement in accordance with any one of claims 1 to 6, or a device according to claim 7, **characterised in that** at least two pairs of the electrodes are provided, by the controllable means, with a positive and a negative potential difference in such a way that the liquid flows and/or the particles are moved.

14. Method according to claim 13, **characterised in that** the pairs of electrodes are actuated individually or in groups.

15. Use of an arrangement according to any one of claims 1 to 6 or a device according to claim 7, as a programmable microfluidic analysis and/or synthesis unit.

16. Use of an arrangement according to any one of claims 1 to 6 or a device according to claim 7, for the cooling of an adjacent microelectronic component or processor.

## Revendications

1. Dispositif pour générer des flux de liquide avec des charges électriques librement mobiles et un substrat qui, au contact avec un liquide avec les charges électriques librement mobiles, développe une double couche électrique, comportant des moyens commandés pour fournir des tensions électriques pour un ensemble de paires d'électrodes (1, 1', 1", 1''') qui se trouvent à la surface du substrat, et qui sont prévues respectivement entre deux zones à la surface du substrat et qui, lorsqu'on applique une tension, génèrent un champ électrique exerçant dans la double couche électrique, une force sur la partie du liquide adjacente à la surface du substrat,

- la surface supérieure du substrat étant subdivisée sous la forme d'un réseau bidimensionnel comme matrice, en zones (3, 3') différentes en amplitude ou en signe algébrique de leurs charges de surface ou de leur hauteur au-dessus du substrat,
- chacune des zones étant entourée par quatre électrodes séparées (1, 1', 1", 1''') qui sont commandées individuellement.

2. Dispositif selon la revendication 1, **caractérisé en ce que** la surface supérieure du substrat est formée d'un semi-conducteur dont la charge de surface est réglée en zones séparées ou en groupes à l'aide de moyens commandés ou à l'aide de seconds moyens commandés.

3. Dispositif selon l'une des revendications 1 à 2, **caractérisé en ce que** sur deux zones voisines, l'une est en verre et l'autre en un oxyde métallique à charge de surface positive.

4. Dispositif selon l'une des revendications 1 à 3, **caractérisé en ce que** deux zones voisines sont formées de polymères ayant des tensions de surface différentes.

5. Dispositif selon l'une des revendications 1 à 4, **caractérisé en ce que** deux zones voisines à la surface du substrat ont sensiblement les mêmes dimensions.

6. Dispositif selon l'une des revendications 1 à 5, **caractérisé en ce que** les zones sont en forme d'échiquier à la surface du substrat.

7. Dispositif délimité par au moins deux dispositifs selon l'une des revendications 1 à 6, entre lesquels se trouve le liquide.

8. Procédé de réalisation d'un dispositif selon l'une des revendications 1 à 7, comportant les étapes consistant à :

a) fournir le substrat,

b) appliquer des moyens commandés pour le branchement de l'ensemble des électrodes qui,

c) sont appliquées en paires à la surface du substrat,

d) traiter la surface du substrat de façon que la surface du substrat soit subdivisée en zones sous la forme d'une matrice pour que deux zones voisines diffèrent en amplitude ou en signe algébrique de leur charge de surface ou de leur hauteur au-dessus du substrat.

9. Procédé selon la revendication 8,
**caractérisé en ce que**
les électrodes sont appliquées en paires à la surface du substrat pour subdiviser ainsi en zones la surface sous la forme d'une matrice.

10. Procédé selon la revendication 8 ou 9,
**caractérisé en ce que**
pour chaque fois deux zones voisines, l'une est munie d'au moins un revêtement dont la charge de surface diffère en amplitude ou en signe algébrique de celle de la surface du substrat.

11. Procédé selon la revendication 8 ou 9,
**caractérisé en ce qu'**
on utilise un substrat ayant une surface en un matériau semi-conducteur dont la charge de surface dans au moins l'une des zones est réglée à l'aide des moyens commandés ou à l'aide de seconds moyens commandés.

12. Procédé selon la revendication 8 ou 9,
**caractérisé en ce que**
parmi deux zones voisines, chaque fois l'une est munie d'un creux.

13. Procédé de gestion d'un dispositif selon l'une des revendications 1 à 6, ou d'un dispositif selon la revendication 7,
**caractérisé en ce qu'**
au moins deux paires d'électrodes sont munies de moyens de commande avec une différence de potentiel positive ou négative de façon que le liquide coule et/ou que les particules se déplacent.

14. Procédé selon la revendication 13,
**caractérisé en ce que**
les paires d'électrodes sont commandées séparément ou en groupes.

15. Utilisation d'un dispositif selon l'une des revendications 1 à 6, ou d'un dispositif selon la revendication 7, comme unité d'analyse et/ou de synthèse programmable micro-fluidique.

16. Application d'un dispositif selon l'une des revendications 1 à 6, ou d'un dispositif selon la revendication 7, pour refroidir un composant microélectronique adjacent ou un processeur.

Fig. 1a

Fig. 1b

Fig. 2a

1    2    1'    2'    1''

Fig. 2b

1    3    5    4    1'    4'    5'    3'    1''

EP 1 979 738 B1

Fig. 2c

Fig. 2d

Fig. 3

Fig. 4

Fig. 5

Fig. 6

EP 1 979 738 B1

Fig. 7

1, 1',
1'',1''''

3

3'

Fig. 8a

Fig. 8b

Fig. 8c

Fig. 8d

Fig. 8e

Fig. 8f

Fig. 9a

Fig. 9b

Fig. 9c

Fig. 10a

Fig. 10b

Fig. 11a

Fig. 11b

Fig. 11c

Fig. 11d

Fig. 12a

Fig. 12b

12"

13"

Fig. 13

Fig. 14

12""

15

13""

Fig. 15

Fig.16a

Fig. 16b

Fig. 16c

Fig. 16d

Fig. 16e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0727661 B1
- EP 0595290 B1
- DE 10103399 A1
- EP 1362827 A1

**In der Beschreibung aufgeführte Nicht-Patentliteratur**

- **D.P.J. BARZ ; P. EHRHARD.** Model and verification of electrokinetic flow and transport in a micro electrophoresis device. *Lab on a chip,* 2005, vol. 5, 949-958
- **N.J. PETERSEN ; R.P.H. NIKOLAJSEN ; K.B. MOGENSEN ; J.P. KUTTER.** Effect of Joule heating on efficiency and performance for microchip-based and capillary-based electrophoretic separations: A closer look. *Electrophoresis,* 2004, vol. 25, 253-269
- **B.J. KIRBY ; E.F. HASSELBRINK JR.** Zeta Potential of microfluidic substrates: 2.Data for polymers. *Electrophoresis,* 2004, vol. 25, 203-213
- *Zeta Potential of microfluidic substrates: 2. Data for Polymers, Electrophoresis,* 2004, vol. 25, 203-213
- **R.B.M. SCHASFORT ; S. SCHLAUTMANM ; J. HENDRICKSE ; A. VAN DEN BERG.** Field-Effect Flow Control for Microfabricated Fluidic Networks. *Science,* 1999, vol. 286, 942-945
- **A.D. STROOCK ; M. WECK ; D.T. CHIU ; W.T.S. HUCK ; P.J.A. KENIS ; R.F. ISMAGILOV ; G.M. WHITESIDES.** Patterning Electro-osmotic Flow with Patterned Surface Charge. *Physical Review Letters,* 2000, vol. 84, 3314-3317
- **R.-L. CHIEN ; L. BOUSSE.** Electroosmotic pumping in microchips with nonhomogeneous distribution of electrolytes. *Electrophoresis,* 2002, vol. 23, 1862-1869
- **Y. TAKAMURA ; H. ONODA ; H. INOKUCHI ; S. ADACHI ; A. OKI ; Y. HORIIKE.** Low-voltage electroosmosis pump for stand-alone microfluidics devices. *Electrophoresis,* 2003, vol. 24, 185-192
- **I. GITLIN ; A.D. STROOCK ; G.M. WHITESIDES ; A. AJDARI.** Pumping based on Transverse Electrokinetic Effects,. *Applied Physics Letters,* 2003, vol. 83, 1486-1488
- **AUS V. STUDER ; A. PEPIN ; Y. CHEN ; A. AJDARI.** An integrate AC electrokinetic pump in a microfluidic loop for fast and tunable flow control. *Analyst,* 2004, vol. 129, 944-949
- **A. RAMOS ; H. MORGAN ; N.G. GREEN ; A. CASTELLANOS.** AC Electric-Field-Induced Fluid Flow in Microelectrodes. *J. Colloid and Surface Sciences,* 1999, vol. 217, 420-422
- **A. RAMOS ; H. MORGAN ; N.G. GREEN ; A. GONZALES ; A. CASTELLANOS.** Pumping of liquids with travelling-wave electroosmosis. *Journal of Applied Physics,* 2005, vol. 97, 084906-1